# EUROPEAN PATENT SPECIFICATION

(11) **EP 1 869 274 B1**
(45) Date of publication and mention of the grant of the patent: **26.01.2011**
(21) Application number: 06721689.5
(22) Date of filing: 22.03.2006
(51) Int. Cl.: E05B 65/32, E05C 3/22

(54) **GLOBAL SIDE DOOR LATCH**
GLOBALES SEITENTÜRSCHLOSS
DISPOSITIF DE VERROUILLAGE DE PORTE LATERAL GLOBAL

(30) Priority: 23.03.2005 US 664613 P
(43) Date of publication of application: 26.12.2007
(73) Proprietor: Magna Closures Inc., Newmarket, ON L3Y 4X7 (CA)
(72) Inventor: TOMASZEWSKI, Kris, Newmarket, Ontario L3X 1N4 (CA); CETNAR, Roman, Newmarket, Ontario L3Y 7J6 (CA)
(74) Representative: Hössle Patentanwälte Partnerschaft
(86) International application number: PCT/CA2006/000421
(87) International publication number: WO 2006/099730

(56) References cited:
- EP-A1- 0 775 791
- EP-A1- 1 035 281
- WO-A1-2004/085774
- WO-A1-2004/085774
- GB-A- 2 349 171
- GB-A- 2 349 171
- US-B1- 6 764 113
- US-B1- 6 824 177
- US-B2- 6 568 722

## Description

### FIELD OF THE INVENTION

The present invention relates to automotive door latches. More specifically, the present invention relates to door latches used in driver and passenger side door latches.

### BACKGROUND OF THE INVENTION

GB 2 349 171 A discloses a vehicle door latch device, wherein the device has a double action mechanism in which an inner lever connects to an inside handle, a release lever effects unlatching and a slide link is connected to an unlock operating lever. During a first handle operation the inner lever engages the operating lever to unlock the device and a blocking surface thereon restrains the slide link until the inner lever has returned. The slide link is than moved by a spring until the inner lever and the released lever are connected.

WO 2004/085774 A1 relates to a lock, comprising an opening lever, a locking lever for displacement of a connecting rod between a first position in which the opening lever cooperates with the connecting rod to open the lock and a second position which prevents the opening of the lock. Locking means, to prevent a displacement of the rod between the first and second positions when the opening lever is placed in an open position before the locking lever is operated, are provided and also an elastic device, for memorizing an unlocking movement as well as a locking movement when the locking lever is operated while the connecting rod is locked by locking means.

EP 0 775 791 A1 discloses a remotely controlled power operable lock actuator mechanism for vehicle doors, wherein the mechanism comprises a main power driven locking lever rocking between locked and unlocked condition and a T-shaped output lever one arm of which has a longitudinal slot. Coaxial with the output lever is a drive input lever operated by the interior door handle and having a slot with a lateral extension. A drive dog pin is received in both slots and can be shifted longitudinally thereof by a superlocking power actuator to disable drive connection between the levers by positioning the dog in a slot extension.

US 66 824 177 B1 discloses a vehicle door latch, wherein the latch has a latch mechanism, a locking lever movable between a locked position and an unlocked position, a motor drive, and a blocking lever engageable with the locking lever. The locking lever can be decoupled from the blocking lever during fast unlocking so that the locking lever can move into its unlocked position.

EP 1 035 281 A1 discloses a locking system for a door of a motor vehicle, comprising a lock provided with a locking unit, an operating unit capable of interacting with the locking unit to cause it to open, a safety lever which can be placed in a first and a second position for blocking and enabling, respectively, the opening of the locking unit from the outside, a first electrical actuator having an output member movable along a first path to cause the opening of the locking unit independently of the position assumed by the safety lever, and a second electrical actuator for moving the safety lever between the blocking and enabling positions.

Automotive companies are looking to provide new features for their vehicles, even on traditionally simple components such as latches. Features such as "set and slam latching", double-locking and power-locking are rapidly becoming standard features. For rear doors, child-locks are virtually mandatory. At the same time, automotive manufacturers are looking to standardize parts in order to reduce assembly costs. Therefore, it is desirable to produce a door latch that can accommodate different features within one packaging. For instance, key-only locking (to prevent people from locking their keys in their car) may be desirable for some models or sales regions, but not others. Thus, the latch design must be able to accommodate latches that have and don't have this feature.

Additionally, the latch still needs to be reliable and provide manual fail safes for these new features. For instance, manual locking must be provided in addition to power-locking. Moreover, the manual locking must be able to override the power-locking feature when used.

### SUMMARY OF THE INVENTION

It is an object of the invention to provide a novel latch for an automotive door. The latch according to claim 1 includes a latch housing having a first and second surface. The first surface on the latch has a channel adapted to receive a striker. A ratchet and pawl are pivotally mounted to the first surface with a portion of the pawl extending through an opening in the housing to the second surface, the ratchet and pawl cooperatively operable to move between an engaged position to hold the striker in the channel, and a released position to permit the striker from exiting the channel, the ratchet and pawl further being biased towards the engaged position. In addition, a release lever is pivotally mounted to the second surface of the latch housing, and movable between a resting and a released position. A lock lever is also pivotally mounted to the second surface, and is movable between a locked and an unlocked position. A lock link lever connects the release lever to the lock lever, having a first end pivotally mounted to the lock lever and a second end slidably located in a slot on the release lever. The second end is movable between a locked and an unlocked position in the slot by pivoting the lock lever between its corresponding locked and unlocked positions. Actuating the release lever while the second end of the lock link lever is in its locked position pivots the lock link lever in a first arc and actuating the release lever while the lock link lever is in its unlocked position pivots the lock link lever in a second arc to actuate the pawl into its released position. The latch comprises a double lock connected to the lock link lever so that the double lock is operable to kinematicaly decouple the lock link lever from the lock lever and kinematically recouple the lock link lever to the lock lever.

### BRIEF DESCRIPTION OF THE DRAWINGS

Preferred embodiments of the present invention will now be described, by way of example only, with reference to the attached Figures, wherein:
Figures 1A and 1B are exploded views of a cable-actuated, front side door latch in accordance with a first embodiment of the invention;
Figures 2 is a plan view of a latch housing mounted to the latch shown in Fig. 1A and 1B, with the frame plate removed;
Figures 3A, 3B and 3C are partial plan views a ratchet and pawl mounted to the latch housing shown in Fig. 2;
Figure 4 is an isometric view of the an outside release assembly mounted to the latch shown in Figs 1A and 1B;
Figures 5A and 5B are plan views of the unlocked latch with outside release mechanism mounted to the latch shown in Fig. 4;
Figures 6A and 6B are isometric views of the inside release lever;
Figures 7A and 7B are isometric views of the inside release assembly mounted to the latch shown in Figs 5A and 5B including the latch housing;
Figures 8A and 8B are isometric views of the manual inside and outside lock assemblies mounted to the latch shown in Figs 1A and 1B;
Figure 9 is an isometric view of a power lock assembly mounted to the latch shown in Figs 8A and 8B;
Figures 10A and 10B are plan views of a double lock assembly and manual double lock override mounted to the latch shown in Fig. 9;
Figure 11 is an isometric view of the latch cover mounted to the latch shown in Figs. 1A and 1B;
Figures 12A, 12B and 12C are plan views showing a door ajar and a door open switches in relation to a switch cam that are mounted to the latch shown in Figs 1A and 1B with the latch housing and latch cover removed;
Figures 13A and 13B are plan views showing a door lock and a door unlock switch in relation to outside lock lever mounted to the latch shown in Figs 12A, 12B and 12C with the latch cover removed;
Figures 14A and 14B are plan views showing a key-only lock assembly mounted to a side door latch in accordance with another embodiment of the invention;
Figure 15 is an exploded view of a cable-actuated, rear side door latch in accordance with another embodiment of the invention;
Figure 16 shows an isometric view of a child lock assembly mounted to the latch shown in Fig. 15;
Figures 17A and 17B are cutaway views of the child lock assembly shown in Fig 16;
Figure 18 is an exploded view of a rod-actuated, rear side door latch in accordance with another embodiment of the invention;
Figures 19A to 19D are plan views of a child lock assembly in isolation in accordance with another embodiment of the invention;
Figure 20 is an isometric cutaway view of an alternate embodiment of a door latch with a power release actuator in accordance with another embodiment of the invention;
Figure 21 is an exploded view of the power release actuator shown in Fig. 20;
Figures 22A, 22B, and 22C are isolated views of a power release actuator for the door latch shown in Fig. 20; and
Figures 23 is an isolated views of a double lock override assembly for the door latch shown in Fig. 20.

### DETAILED DESCRIPTION OF THE INVENTION

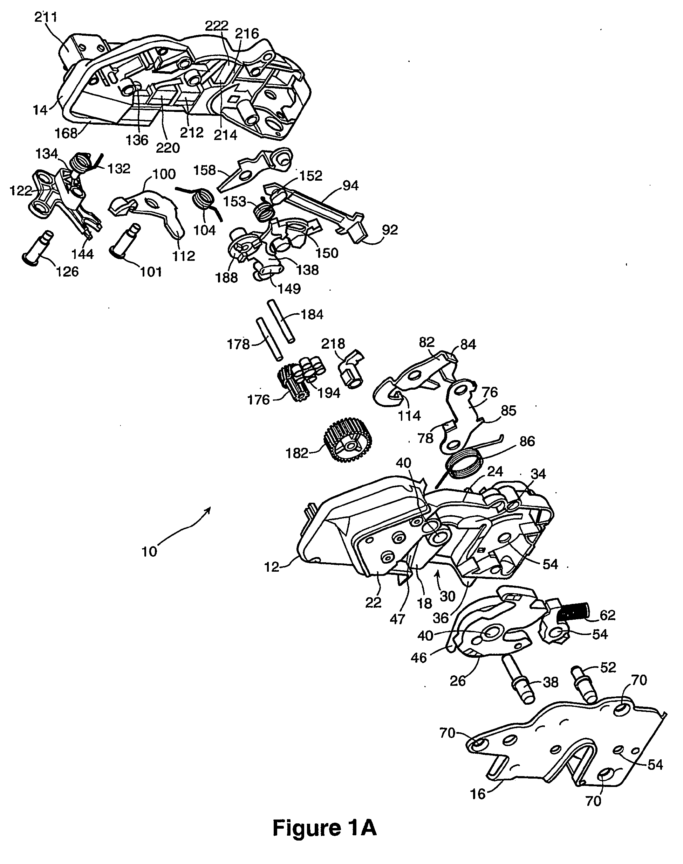

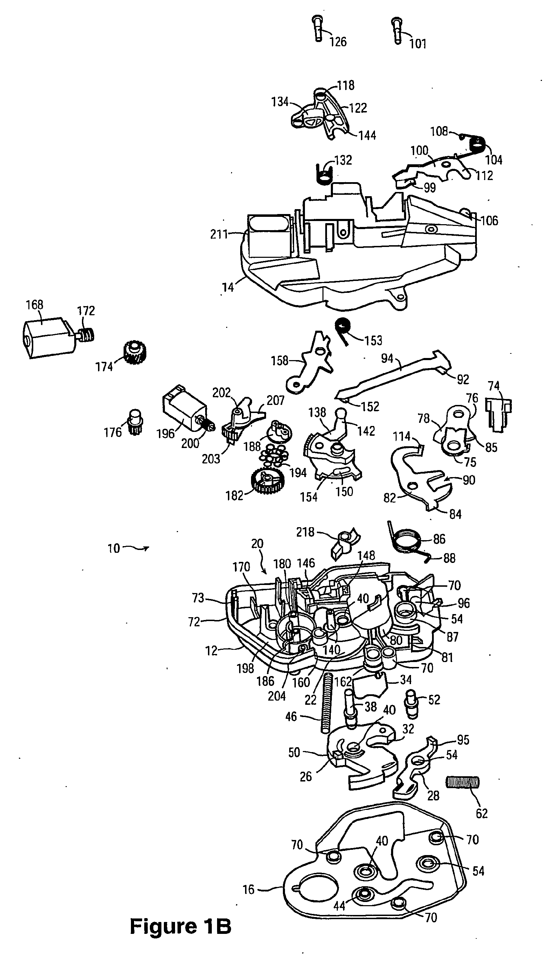

Referring now to Figs. 1A and 1B, a global latch is shown generally at 10. Latch 10 is adapted to mount to a front side door on a motor vehicle. As is described in greater detail below, latch 10 is rod-actuated via the outside door handle, and cable-actuated via the inside door handle. Latch 10 includes a clam-shell latch housing 12, a complementary latch cover 14, and a frame plate 16. An outer chamber 18 is formed in a recessed area of latch housing 12, and is covered by frame plate 16 (Fig. 1A). An inner chamber 20 is formed between latch housing 12 and latch cover 14 (Fig. 1B). Both latch housing 12 and latch cover 14 are preferably formed from a rigid thermoplastic material.

### Housing and Striker Retention

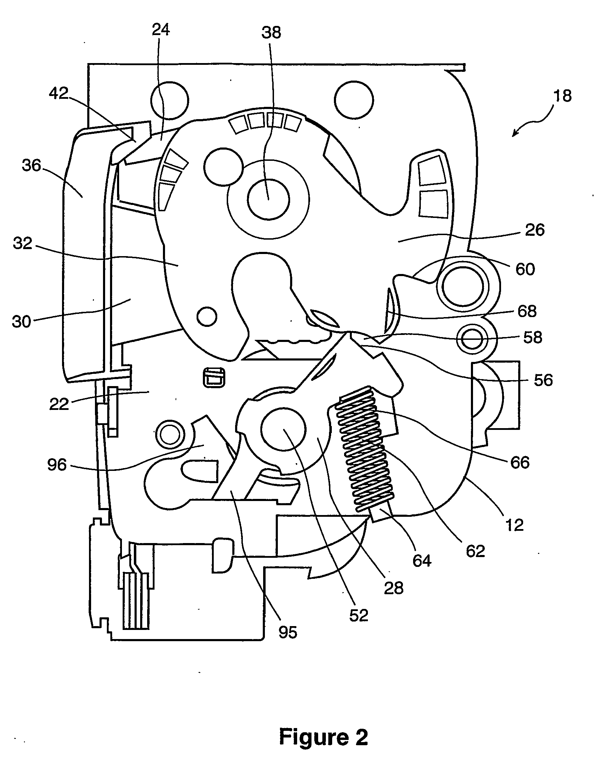

Referring now to Fig. 2, latch housing 12 includes a substrate 22 and peripheral walls 24, which along with frame plate 16 (Fig. 1A) define outer chamber 18. A ratchet 26 and pawl 28 are disposed within outer chamber 18. A frusto-trapezoidal channel, referred to as a "fishmouth" 30 bisects substrate 22. Fishmouth 30 is designed to receive a striker (not shown), which engages a hook arm 32 of ratchet 26, as known to those of skill in the art. Preferably, an elasomeric or rubber overslam bumper 34 is mounted at the apex end of fishmouth 30 (Fig. 1B). Overslam bumper 34 functions to receive and absorb the impact of the striker thus reducing the stresses on the latch and reducing noise. Also preferably, an outer seal 36 is mounted around the orifice of fishmouth to seal the latch opening of the door frame.

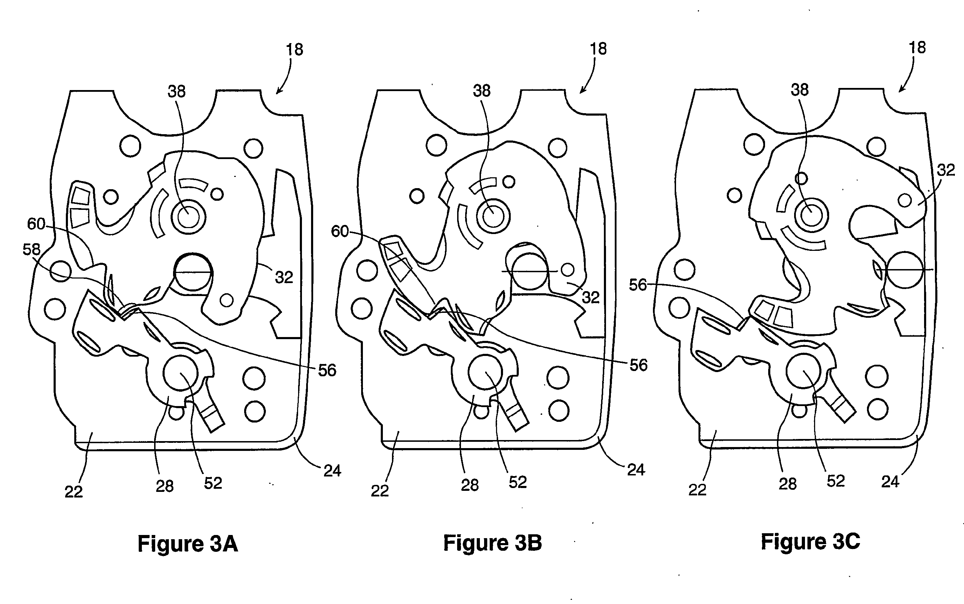

Ratchet 26 is pivotally mounted to substrate 22 via a ratchet rivet 38 inserted into aligned holes 40 provided in substrate 22, ratchet 26 and frame plate 16 (Fig. 1B). As can be seen in Figs. 3A, 3B and 3C, ratchet 26 is pivotable between a "primary engagement" position (Fig 3A), a "secondary engagement" position (Fig. 3B), and a "released" position (Fig 3C). The angular travel of ratchet 26 is delimited by an open position stop bumper 42 (Fig. 2) on outer seal 36 (the released position), and an overslam post 44 depending from frame plate 16 in the overslam position (Fig. 1). When a striker enters fishmouth 30, it rotates ratchet 26 towards the primary engagement position. A ratchet spring 46 (Fig. 1A) urges ratchet 26 towards the released position. Ratchet spring 46 is retained within a spring channel 47 within substrate 22 (Fig. 1A). One end of ratchet spring 46 abuts a sidewall 48 of substrate 22 and the other end abuts a tab 50 (Fig. 1B) depending from ratchet 26 into spring channel 47. Rotating ratchet 26 towards the engagements positions compresses ratchet spring 46.

Pawl 28 is pivotally mounted to substrate 22 via a pawl rivet 52 that is inserted into aligned holes 54 that are provided in substrate 22, ratchet 26 and frame plate 16 (Fig. 1B). Pawl 28 is movable between an "engaged" position where it abuts ratchet 26 or housing 22 and a released position, where it is rotated away from ratchet 26 to permit ratchet 26 to rotate towards the released position. A ratchet shoulder 56 on pawl 28 abuts a primary tooth 58 on ratchet 26 when ratchet 26 is in its primary engagement position, preventing ratchet 26 from rotating towards the released position. Ratchet shoulder 56 abuts a secondary tooth 60 when ratchet 26 is in its secondary position, again preventing ratchet 26 from rotating to the released position. A pawl spring 62 urges pawl 28 towards the engaged position (Fig. 1B). One end of pawl spring 62 abuts a sidewall 64 of substrate 22, and the other end abuts a spring shoulder 66 on pawl 28. Rotating pawl 28 to the released position compresses pawl spring 62.

Ratchet 26 and pawl 28 are preferably constructed out of metal but covered with a plastic material in order to reduce noise during operation. Certain portions subject to wear, such as primary tooth 58 are not covered by plastic. Also preferably, hollow sound dampeners 68 are provided in ratchet 26 and pawl 28 proximate the engaging surfaces. Other forms of sound dampening are within the scope of the invention.

Frame plate 16 is mounted over outer chamber 18 on latch housing 12 (Fig. 1A), and provides a tight seal. Frame plate 16 is secured in place via ratchet and pawl rivets 38 and 52 and screws that pass through aligned fastener holes 70 provided in frame plate 16, latch housing 12 and latch cover 14, and thus hold the structural components of global latch 10 together. Inner chamber 20 (Fig. 1B) is defined by substrate 22 and peripheral sidewalls 72. Latch cover 14 abuts against an inner lip 73 formed by peripheral sidewalls 72. As described above, latch cover 14 is secured against latch housing 12 via screws in fastener holes 70.

### Outside Release Assembly

Latch 10 includes an outside release assembly actuated by the outside door handle, and an inside release assembly actuated by the inside door handle. Both the outside and the inside release assemblies act upon pawl 28 to release ratchet 26.

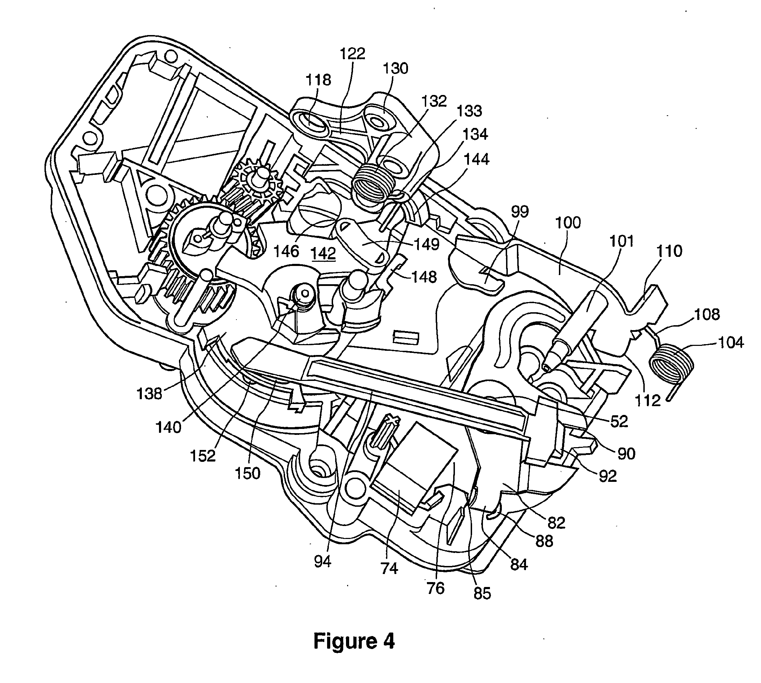

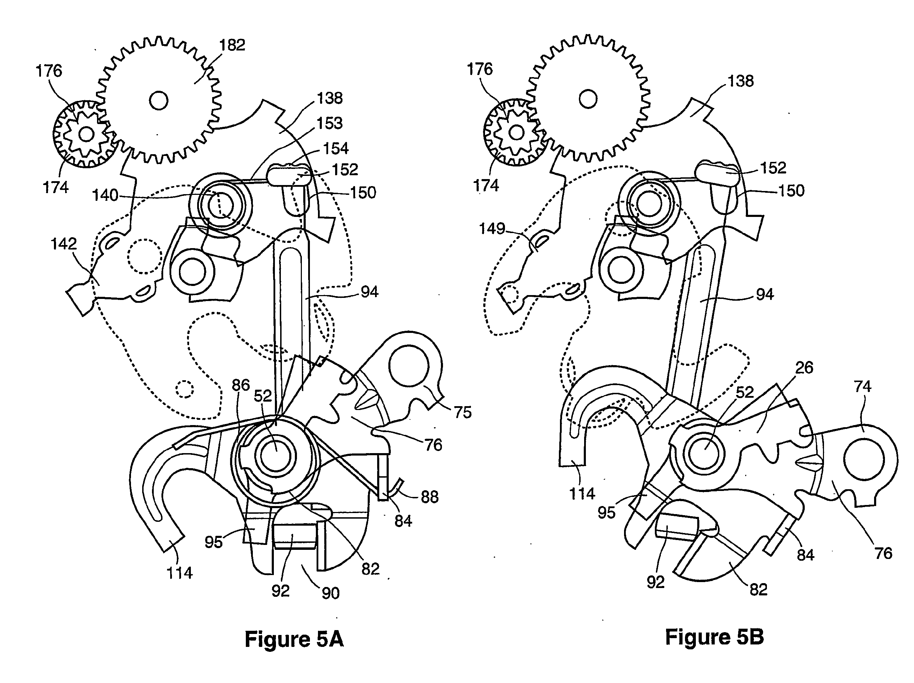

Referring now to Fig. 4, 5A and 5B the outside release assembly is described in greater detail. Pulling the outside door handle (not shown) actuates a door rod (also not shown). The other end of the door rod terminates in an adjustable rod clip 74, rotatably mounted to a clip arm 75 extending from outside release lever 76. Outside release lever 76 is pivotally mounted around pawl rivet 52. The angular travel of outside release lever 76 is delimited by a depending tab 78 that rotates between sidewalls 80 and 81 formed in substrate 22 (Fig. 1B), and is pivotable between a "resting" position (Fig. 5A), where tab 78 abuts sidewall 80 and an "actuated" position (Fig. 5B) where tab 78 abuts sidewall 81.

A release lever 82 is pivotally mounted around pawl rivet 52, adjacent outside release lever 76. A depending tab 84 on release lever 82 abuts a shoulder 85 on outside release lever 76. A release lever spring 86, pivotally mounted around a hollow post 87 formed in substrate 22 around hole 56 (Fig. 1B), provides a hook 88 wrapped around depending tab 84, thereby coupling release lever 82 with outside release lever 76. As such, actuating outside release lever 76 also actuates release lever 82, and further limits its motion accordingly. In addition, release lever spring 86 biases both outside release lever 76 and release lever 82 towards their resting positions.

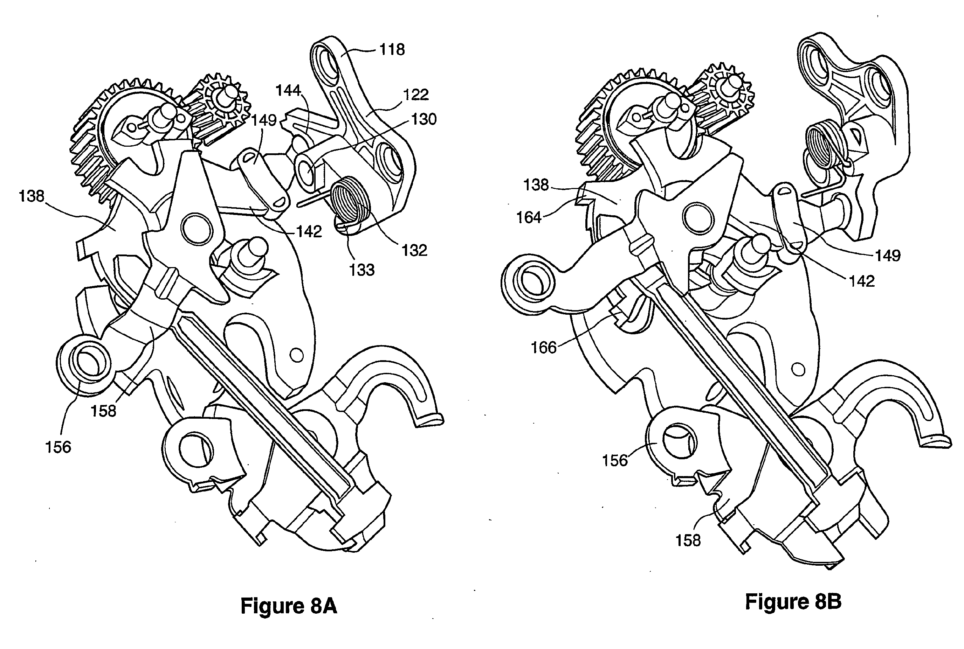

A lock link slot 90 is provided in release lever 82, and a lock link tab 92 depending from a lock link lever 94 is situated therein. Lock link lever 94 is slidable between an "unlocked" position where it is maximally retracted into lock link slot 90, and "locked" position where it extends out to near the mouth of lock link slot 90. Fig. 5A shows lock link lever in the unlocked position. (Fig. 8B shows lock link lever 94 in the locked position.) When located in the unlocked position, lock link tab 92 abuts a pawl insert 95 that depends from pawl 28 through a slot 96 in substrate 22 (Fig. 1B). Actuating release lever 82 when lock link tab 92 is in the unlocked position actuates pawl insert 95, thus releasing ratchet 26 to its released position. When located in the locked position, lock link tab 92 is displaced away from pawl insert 95. Thus, actuating release lever 82 when lock link tab 92 is in the locked position does not actuate pawl insert 95 to release ratchet 26. As is described in greater detail below with reference to the outside lock, actuating release lever 82 does not inhibit the outside handle locking/unlocking function.

### Inside Release Assembly

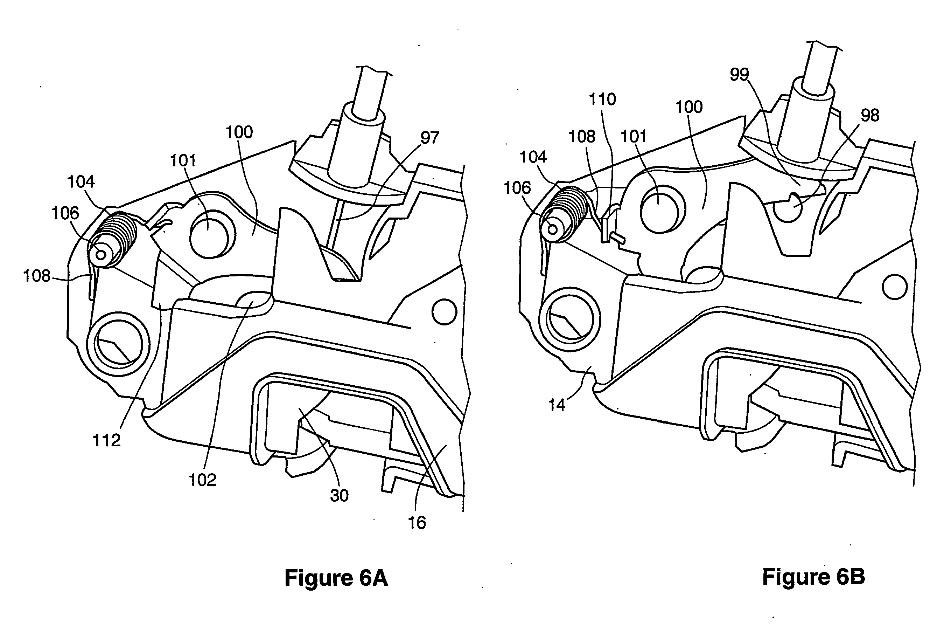

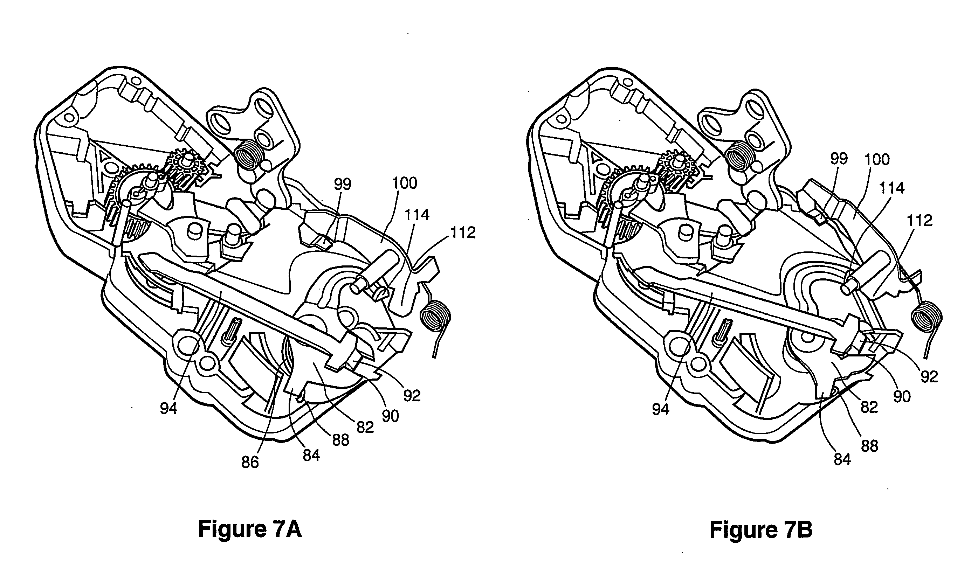

Referring now to Figs. 5A, 5B, 6A, 6B, Fig. 7A and 7B, the inside release assembly will now be described in greater detail. Pulling the inside door handle (not shown) actuates an inside door cable 97. A ball end 98 of the inside door cable 97 is attached to a hook arm 99 on inside release lever 100. Inside release ever 100 is pivotally mounted around a lever rivet 101 that is mounted in a hole provided in the surface of latch cover 14 (Fig. 1B), and is movable between a resting position (shown in Fig. 5A, 6A and 7A) and an actuated position (Fig 5B, 6B and 7B). The angular travel of inside release lever 100 is delimited by a tab 102 on latch cover 14 and ball end 98. An inside release lever spring 104, pivotally mounted around a post 106 formed in the substrate of latch cover 14, provides arms 108 that abut a sidewall portion 109 on latch cover 14 and a tab 110 on inside release lever 100, thereby biasing inside release lever 100 towards the resting position. A depending tab 112 on inside release lever 100 abuts an inside release arm 114 on release lever 82 (Fig. 5A). Thus, actuating inside release lever 100 also actuates release lever 82 (Fig 5B). As described above, actuating release lever 82 when link lock tab 92 is in the unlocked position actuates pawl insert 95 to release the latch.

### Inside Lock/Unlock Assembly

Referring now to Figs. 4, 8A and 8B, the inside lock/unlock assembly will now be described in greater detail. Manually releasing the inside lock switch (not shown) actuates a lock rod (also not shown). The other end of the lock rod is attached to a loop 118 on inside lock lever 122. Inside lock lever 122 is pivotally mounted around a lever rivet 126 (Fig. 1B) that is mounted in aligned rivet holes 130 provided in inside lock lever 122, and the surface of latch cover 14. Inside lock lever pivots between a "locked" position (Fig. 8A) and an "unlocked" position (Fig. 8B). A lock toggle spring 132 having a first spring arm 133 mounted within a lever post hole 134 depending from inside lock lever 122, and a second spring arm 133 mounted within a cover post hole 136 depending from latch cover 14 (Fig. 1A) biases inside lock lever 122 to either the locked or the unlocked positions.

A lock lever 138 is pivotally mounted to a post 140 extending from substrate 22 within inner chamber 20. An arm 142 extends from lock lever 138 and is actuated by a claw 144 provided at the end of inside lock lever 122. The angular travel of lock lever 138 is delimited by a shoulder 146 and 148 formed from substrate 22. Lock lever 138 is movable between a locked position, where arm 142 abuts shoulder 146 (Fig. 8A), and an unlocked position where arm 142 abuts shoulder 148 (Fig. 8B). To reduce noise and wear, a lock lever bumper 149 is preferably mounted around arm 142. When lock lever 138 moves into either the locked or the unlocked position, bumper 149 abuts one of shoulder 146 and 148.

A slot 150 is provided in lock lever 138. A link lock tab 152 formed from the end of lock link lever 94 opposite lock link tab 92 is retained within slot 150. As can be more clearly seen in Figs. 5A and 5B a lock link spring 153 is pivotally mounted around post 140 and urges link lock tab 152 against sidewall 154 of slot 150. This arrangement translates the rotational movement of lock lever 138 into linear motion of lock link lever 94, so that lock link lever 94 is in the unlocked position when lock lever 138 is in the unlocked position, and lock link lever 94 is in the locked position when lock lever 138 in the locked position.

Should release lever 82 be actuated (i.e., someone is pulling on the inside or outside door handles) when lock lever 138 is moved from the locked to the unlocked position, ratchet 26 does not release. However, once release lever 82 is released (i.e., the inside or outside door handle is released), lock link spring 153 moves lock link lever 94 to the unlocked position, so that re-actuating release lever 82 by pulling on the inside or outside door handle will now release ratchet 26.

### Outside Lock/Unlock Assembly

Still referring to Fig. 8A and 8B, the outside lock/unlock assembly will now be described. Turning the outside lock key cylinder (not shown) actuates an outside lock rod (also not shown). The other end of the outside lock rod is attached to a loop 156 on an outside lock lever 158. Outside lock lever 158 is pivotally mounted to post 140 over lock lever 138. The angular motion of outside lock lever 158 is delimited by shoulder stops 160 and 162 formed from substrate 22 (Fig. 1B). As outside lock lever 158 pivots between these two shoulders, it engages one of outside shoulders 164 and 166 formed on lock lever 138, pivoting lock lever 138 as well. Thus, by pivoting outside lock lever 158, lock lever 138 is moved between the locked and unlocked positions.

### Power Lock/Unlock Assembly

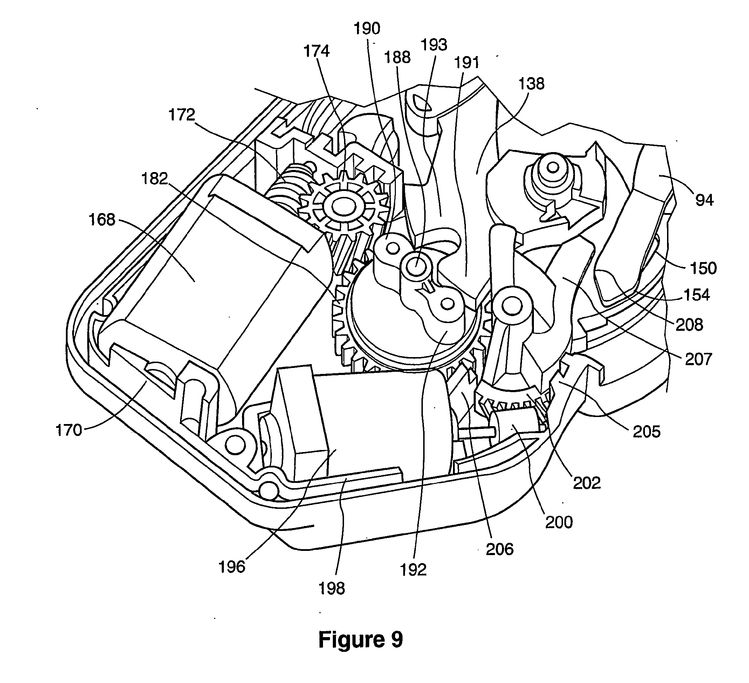

In addition to manually locking and unlocking latch 10 via the inside or outside lock levers, a user can electrically lock and unlock the latch. Referring now to Fig. 9, the power lock/unlock assembly will now be described. Activating a power lock/unlock switch inside the passenger cabin or on a remote key fob (not shown) engages a lock motor 168, housed in a lock chamber 170, integrally formed from substrate 22. Lock motor 168 is a DC motor, and reversibly drives a worm 172. Worm 172, in turn meshes with a worm gear 174, connected to a pinion 176 (Fig. 5A and 5B) which in turn, is rotatably mounted to a pin 178 located in a hole 180 in substrate 22 (Fig. 1B),. Pinion 176 meshes with a gear spur 182. Gear spur 182 is rotatably mounted to a pin 184, located in a hole 186 in substrate 22 (Fig. 1B).

A cam 188 is mounted to gear spur 182. Engaging lock motor 168 drives worm 172, which in turn drives worm gear 174. Worm gear 174 drives gear spur 182, rotating cam 188 rotates as well. When cam 188 is rotated in a first direction (clockwise), a cam arm 190 on cam 188 engages a side surface of cam shoulder 191 on lock lever 138, pivoting lock lever 138 to the locked position. When lock lever 138 moves into the locked position, a cam arm 192 abuts against cam shoulder 193, preventing further rotation clockwise. Engaging lock motor 168 in reverse causes cam 188 to rotate in the other direction (counterclockwise). Cam arm 190 engages a side surface of cam shoulder 193, pivoting lock lever 138 into the unlocked position. When lock lever 138 moves into the unlocked position, cam arm 192 abuts against cam shoulder 191, preventing further rotation counterclockwise. A radial bumper 194 mounted between cam 188 and gear spur 182 (Fig. 1B) provides a dampening effect. If desired, a frictional spring 195 (Fig. 9B), located around a post 197 can be wrapped around cam 188 to further reduce bounce-back of the cam arms at the end of travel.

### Double Lock Assembly and Deadbolt Override Assemblies

Still referring to Fig. 9, the double locking assembly will now be described. The double lock assembly disables the inside and outside release assemblies. The double lock assembly can be engaged only electrically and only when the latch is already in locked position. It can be disengaged electrically or by operating outside key cylinder as described below. The double lock assembly includes a double lock motor 196, housed in a double lock chamber 198, integrally formed from substrate 22. Double lock motor 196 is a DC motor, and reversibly drives a worm 200. Worm 200, in turn meshes with a deadbolt sector gear 202, rotatably mounted around a post 203 located in a hole 204 in substrate 22 (Fig. 1B). The angular motion of deadbolt sector gear 202 is limited by deadbolt sidewalls 205 and 206, formed from substrate 22, so that deadbolt sector gear 202 is movable between an unlocked position when it abuts deadbolt sidewall 205, and a locked position when it abuts deadbolt sidewall 206.

A deadbolt arm 207 extending from deadbolt sector gear 202 is adjacent lock link lever 94. When deadbolt sector gear 202 is in the unlocked position, lock link lever 94 operates normally. When the lock lever 138 is in locked position and deadbolt sector 202 is moved to its locked position the tip of deadbolt arm 207 engages a side face 208 on lock link lever 94, thereby blocking lock link lever 94 in its position. Thus, lock link lever 94 remains in its locked position even when lock lever 138 is pivoted to its unlocked position. When deadbolt sector gear 202 returns to the unlocked position, link lock spring 153 returns link lock lever 94 to its starting position adjacent sidewall 154, so that lock link lever 138 actuates link lock lever 94 normally.

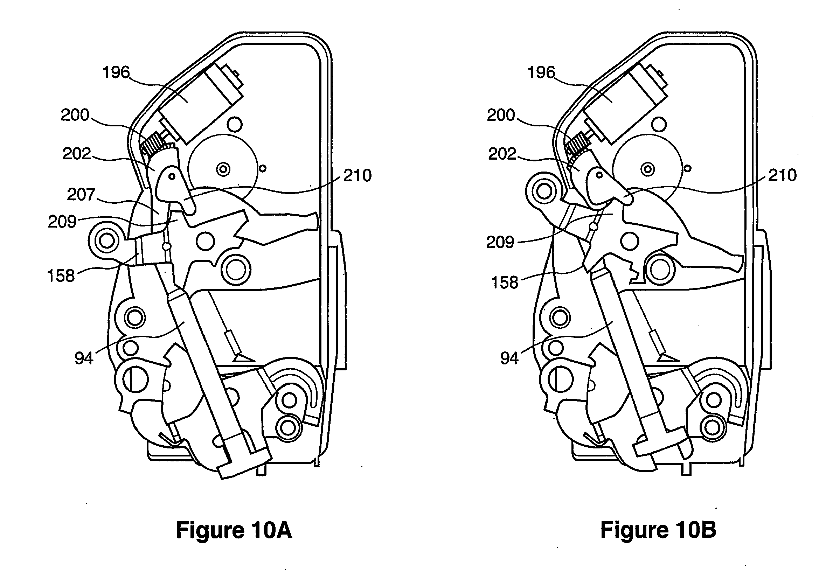

Referring now to Figs. 10A and 10B, a manual override for the double lock is provided, should power or double lock motor 196 fail. If outside lock lever 158 is actuated to the unlocked position while deadbolt sector gear 202 is in the locked position (i.e., by turning the key cylinder), a shoulder 209 on outside lock lever 158 actuates a release arm 210 on deadbolt sector gear 202, pivoting it back to the unlocked position (Fig. 10B), and allowing lock lever 138 and link lock lever 94 to operate normally.

### Electrical Assemblies

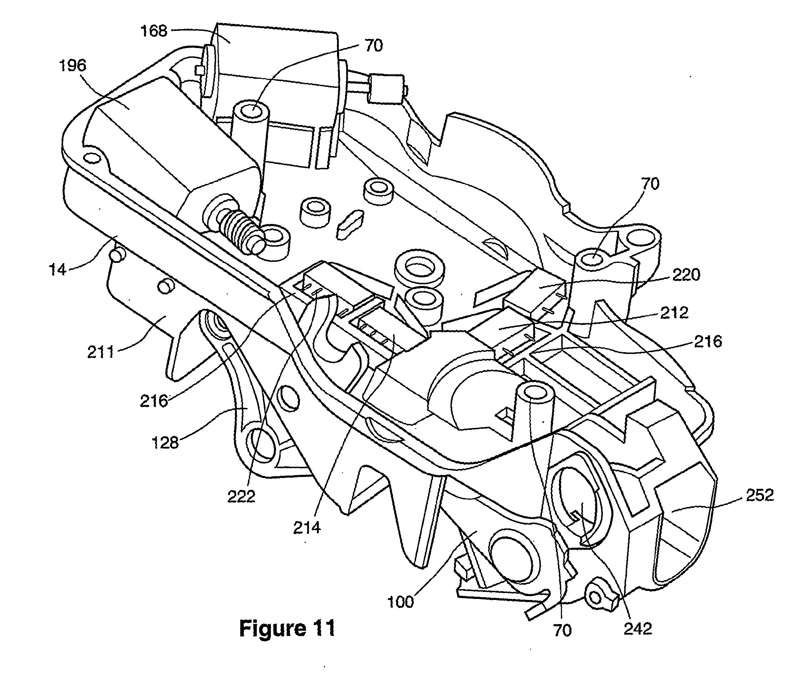

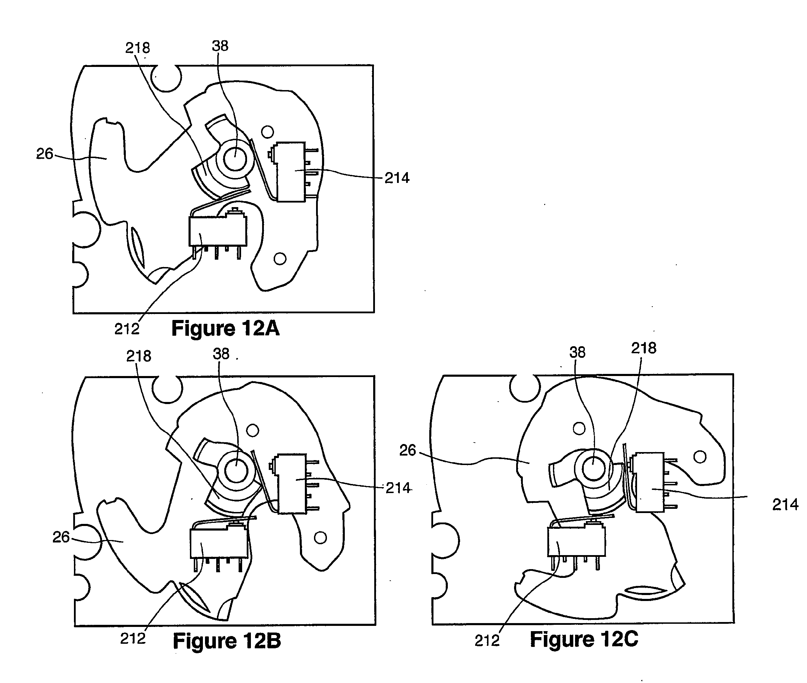

Power and control for the electrical systems of latch 10 are provided via a wiring harness (not shown) that communicates with the interior of latch 10 via connector passage 211 in latch cover 14 (Fig. 1B). The wiring harness connects to lock motor 168 and dead bolt motor 196. Referring now to Fig. 11, 12A, 12B and 12C, a number of sensor switches are also provided, mounted to latch housing 12. These include door ajar switch 212 (having a closed and an ajar state), door open switch 214 (having a closed and an open state). Door ajar switch 212 and door open switch 214 are mounted within switch niches 216 that are integrally formed from the inner surface of latch cover 14, adjacent to a switch cam 218 that extends outwards from latch housing 12. Switch cam 218 is mounted to ratchet rivet 38, so that switch cam 218 rotates in tandem with ratchet 26. When ratchet 26 is pivoted into the primary engagement position (Fig. 12A), switch cam 218 does not contact either switch, so both door ajar switch 212 and door open switch 214 are in the closed state. When ratchet 26 is pivoted into the secondary engagement position (Fig 12B), indicating that the door is only partially closed, switch cam 218 engages door ajar switch 212, placing it in the ajar state. When ratchet 26 is pivoted into the released position (Fig. 12C), switch cam engages both switches, so door ajar switch 212 is in the ajar state, and door open switch 214 is in the open state. Other arrangements of switches in relation to switch cam 218 will occur to those of skill in the art.

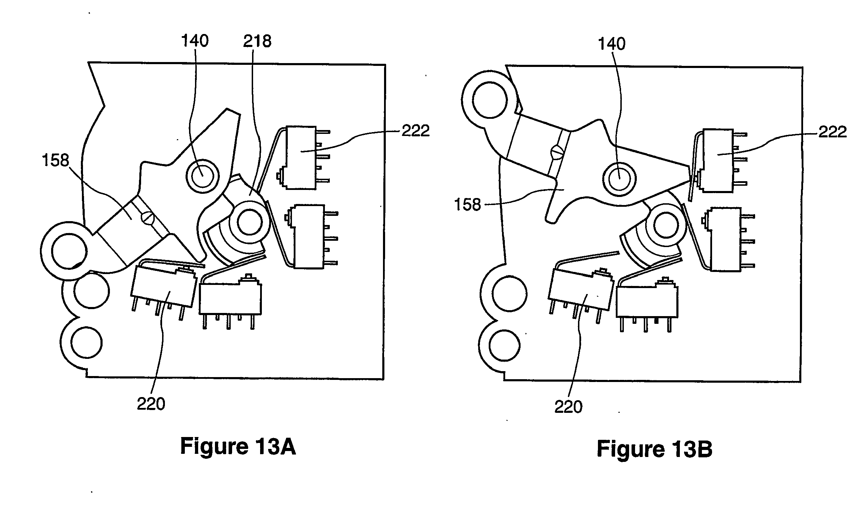

Referring now to Fig. 13A and 13B, an outside lock switch 220 and an outside unlock switch 222 are mounted within switch niches 216, in addition to door ajar switch 212 and door open switch 214. Both switches have an engaged and disengaged state. Outside lock switch 220 and outside unlock switch 222 are not actuated by switch cam 218, but rather by outside lock lever 158. When outside lock lever 158 is in the locked position (Fig. 13A), outside lock switch 220 is in the engaged state and outside unlock switch 222 is in the disengaged state. When outside lock lever 158 is in the unlocked position (Fig. 13B), outside unlock switch 222 is in the engaged state and outside lock switch 220 is in the disengaged state. When outside lock lever 158 is between the locked and unlocked positions, both outside lock switch 220 and outside unlock switch 222 are in the disengaged state. Moving outside lock switch 220 to the engaged state engages door lock motor 168 and double lock motor 196 to lock all the other latches 10 in the vehicle. Moving outside lock switch 220 to the disengaged state engages lock motor 168 and double lock motor 196 to unlock all the other latches 10 in the vehicle.

It is possible to provide outside lock switch 220 and outside unlock switch 222 in some latches 10 on the vehicle, but omit them in other latches 10. For example, the latch 10 on the driver side may be equipped with outside lock switch 220 and outside unlock switch 222, but the latch 10 on the passenger side is not. Other arrangements of switches in relation to outside lock lever 158 will occur to those of skill in the art.

### Key Only Locking and Set and Slam Locking

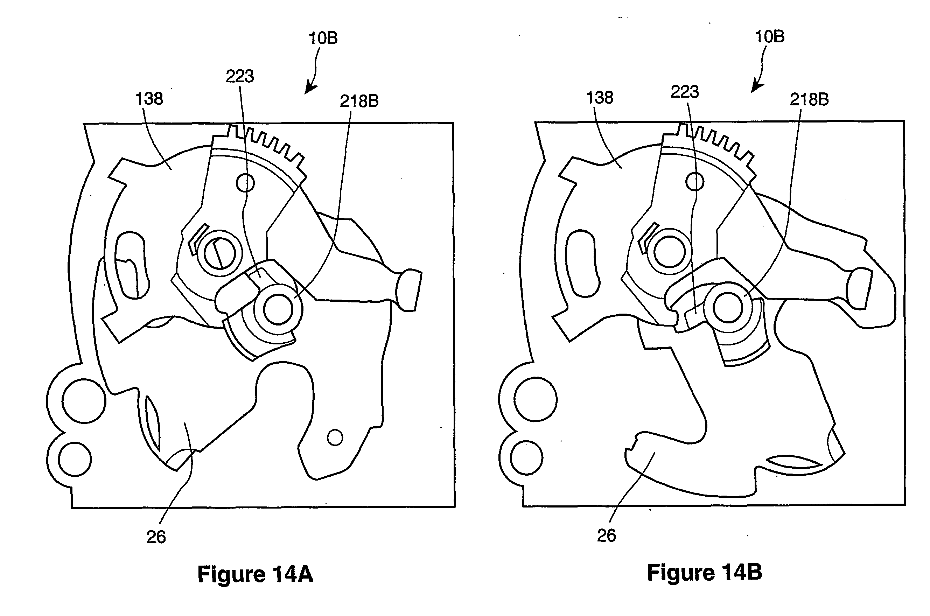

The above description of latch 10 describes one embodiment of the invention, specifically a front side door latch. Alternatively latch 10 can be locked both when the door is closed (i.e., ratchet 26 is in the primary or secondary engagement position), or when the door is open (i.e., ratchet 26 is in the released position). This latter method of locking is referred to as "set and slam locking. However, an optional key-only locking system can be provided to help prevent occupants from locking themselves out of the vehicle. Latch 10B provides a key-only locking system. Referring now to Fig. 14A and 14B, switch cam 218B (which replaces switch cam 218) includes a lockout tab 222 that extends outwards radially from ratchet rivet 38. As can be seen in Fig. 14A, when ratchet 26 is in either of the primary or secondary engagement positions, lock lever 138 operates normally, and can move between the locked and unlocked positions. (Specifically, Fig. 14A shows ratchet 26 in the primary engagement position). As can be seen in Fig 14B, when ratchet 26 rotates to the released position, switch cam 218B also rotates so that lockout tab 222 abuts a lockout shoulder 223 on lock lever 138, thereby preventing lock lever 122 from moving to the locked position. (Lock lever 138 must be in the unlocked position to release latch 10B.) Thus, it is impossible to lock latch 10B when ratchet 26 is in the released position. When ratchet 26 is in either of the primary or secondary engagement positions, then normal movement of lock lever 122 between the locked and unlocked positions is possible.

### Rear Door Latch with Child Lock

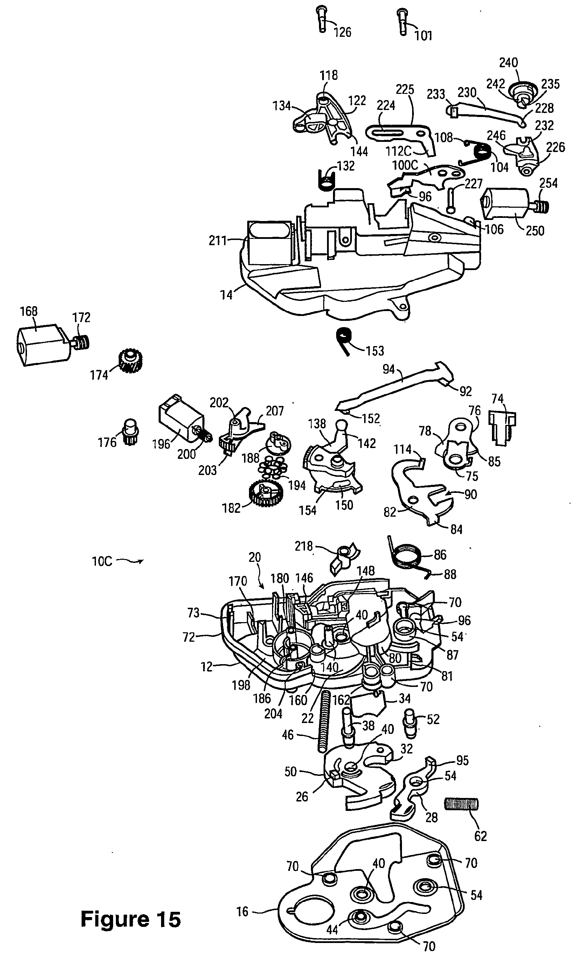

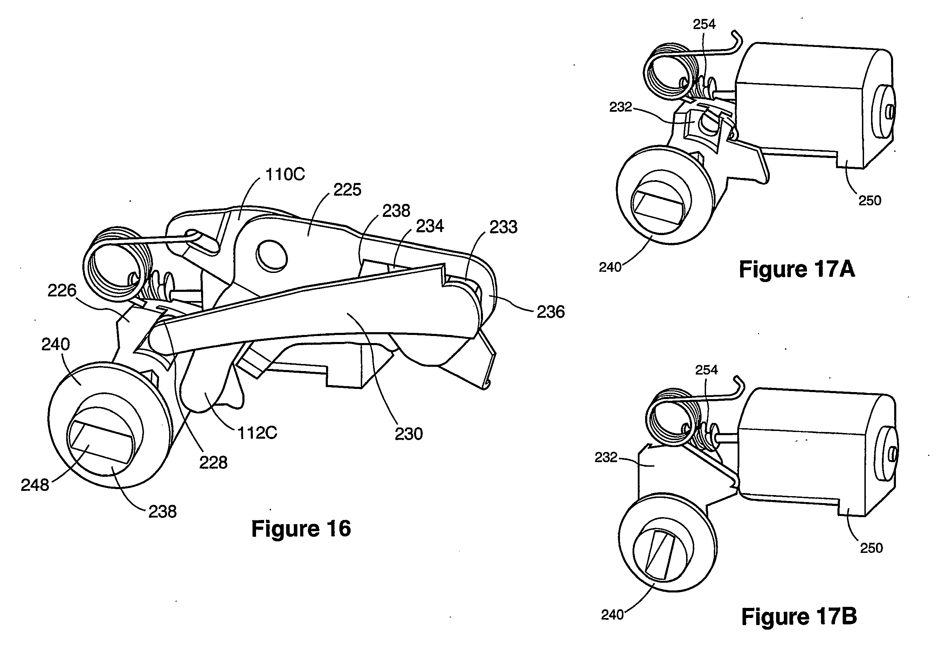

In addition to being mounted to a front driver-side and front passenger-side door, latch 10 can also be adapted for a rear side door. Latch 10C shares many of the components of latch 10. Referring now to Fig 15 and 16 a rear-door latch 10C is shown. Latch 10C is not normally equipped with an outside lock switch 220 or outside unlock switch 222. In addition, latch 10C does not include outside lock lever 158 (since rear doors typically lack key cylinders).

Inside release lever 100C lacks a depending tab 112 to actuate release lever 82. Instead, an auxiliary inside release lever 225 with a depending tab 112C is rotatably mounted to lever rivet 101 adjacent to inside release lever 100C. Thus, actuating auxiliary inside release lever 225 actuates release lever 82. As described above, actuating release lever 82 when link lock tab 92 is in the unlocked position actuates pawl insert 95 to release the latch.

Preferably, latch 10C includes a child lock mechanism to disable the inside release assembly. Referring to Fig. 16, 17A and 17B, a child lock lever 226 is pivotally mounted around a child lock pin 227 located in a hole 229 (Fig. 15) within latch cover 14. Child lock lever'226 is movable between a locked (Fig 17A) and an unlocked position (Fig. 17B). A tab 228 depending from a first end of a child lock link lever 230 is retained within a claw 232 on child lock lever 226. A second tab 233 on child lock link lever 226 is slidably retained within a slot 234 on auxiliary inside release lever 225. As child lock lever 226 pivots between the locked and unlocked positions, child lock link lever 230 slides between a locked and an unlocked position within slot 234. When in the locked position, tab 233 on child lock link lever 230 abuts endwall 236 on auxiliary inside release lever 225. When in the unlocked position, tab 233 on child lock link lever 230 abuts against endwall 238.

When child lock link lever 230 is in the unlocked position, tab 233 abuts against inside release lever 100C. Thus, actuating inside release lever 100C actuates child lock link lever 230, which in turn actuates auxiliary inside release lever 225. As described above, actuating auxiliary inside release lever 204 actuates release lever 82 (Fig. 15) to release the latch (assuming link lock tab 92 is in the unlocked position). When child lock link lever 230 is in the locked position, tab 233 is displaced away from inside release lever 100C. Thus, actuating inside release lever 100C does not actuate child lock link lever 230, nor auxiliary inside release lever 225. Latch 10C is not released, regardless of whether link lock tab 92 is in the locked or the unlocked position. The rear inside release assembly is decoupled from ratchet 26 and pawl 28, preventing accidental door openings.

A child lock knob 240 is rotatably mounted to child lock lever 226, and extends through a hole 242 in latch cover 14 to the exterior surface of latch 10C (Fig. 11). A tab 244 (Fig 14B) depending from child lock knob 240 fits within a slot 246 on child lock lever 226 so that rotating child lock knob 240 rotates child lock lever 226 between the locked and the unlocked position, providing a manual control for the child lock. An external groove 248 allows a person to manually rotate child lock knob 240 (typically with a slotted screwdriver).

In addition to the manual child lock feature, latch 10C can optionally provide a power child lock feature as well. Preferably, a child lock motor 250 is housed within a child lock motor housing 252, provided within latch cover 14 (Fig. 11). Child lock motor 250 is connected to the wiring harness (not shown). Child lock motor 252 is a DC motor that reversibly drives a worm 254. In turn, worm 254 meshes with gear teeth 256 extending out from child lock lever 226 (Fig. 15). Activating child lock motor 250 actuates child lock lever 226 to either the locked or the unlocked positions.

### Rod Actuated Latch

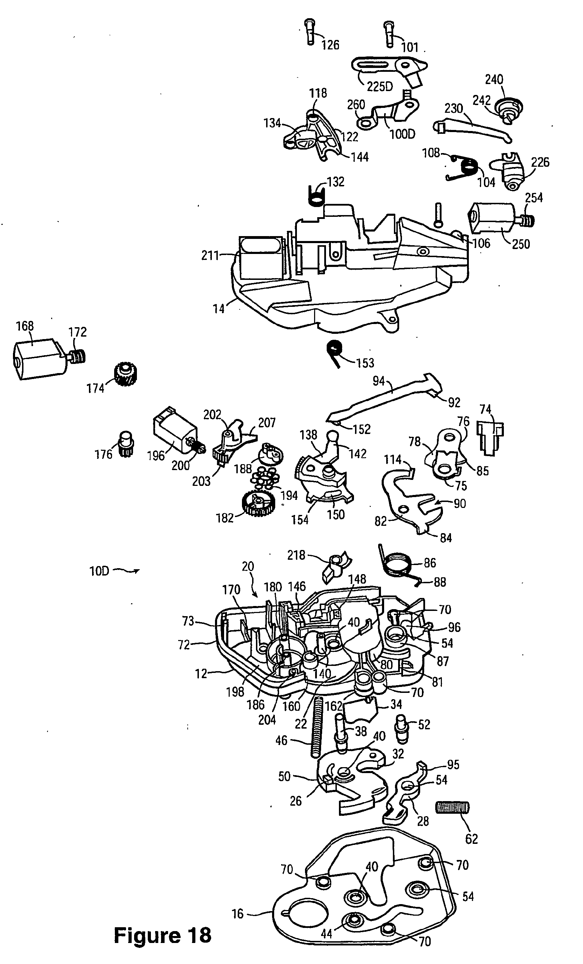

The above-described latches 10 are have cable-actuated inside release assemblies. However, it will be apparent to those of skill in the art that the inside release assemblies for both front and rear side door latches 10 can be modified to become rod-actuated. Referring now to Fig. 18, a rod-actuated, rear side door latch 10D is shown. Both the inside and outside release assemblies on latch 10D are rod actuated. A door rod (not shown) that is connected to the inside door handle (also not shown) is attached to a loop arm 258 on inside release lever 100D. Child link lock lever 230 selectively couples the rotation of inside release lever 100D with auxiliary inside release lever 225D.

### Alternative Rear Door Latch with Child Lock

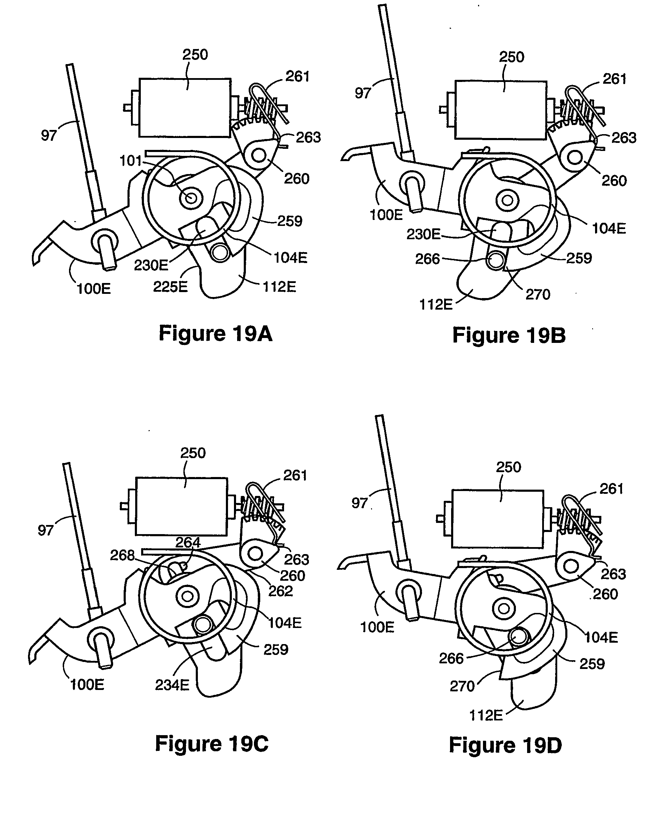

Referring now to Fig 19A to 19D, a portion of a rear-door latch 10E is shown featuring an alternate embodiment of a child lock mechanism to disable the inside release assembly is shown. Inside release lever 100E pivots normally along rivet 101, thereby moving a depending arm 259 along an arc. An inside release lever spring 104E is provided to bias inside release lever 100E to the resting position. An auxiliary inside release lever 225E with a depending tab 112E is rotatably mounted to lever rivet 101 adjacent to inside release lever 100E. Auxiliary inside release lever 225E includes a slot 234E.

Child lock motor 250 meshes with a sector gear 260, and is operable to pivot sector gear 260 between a "child unlocked" position (Figs. 19A and 19B) and a "child locked" (Figs. 19C and 19D). A spring toggle 261 abuts against a gear shoulder 263 on sector gear 260 and is provided to bias sector gear 260 to its full child unlocked or child locked positions. A sector arm 262 extends out radially from sector gear 260 and includes a slot 264. A child lock link lever 230E spans between sector arm 262 and auxiliary inside release lever 225E. A first tab 266 depending from one end of child lock link lever 230E is located within slot 234E on inside release lever 225E, and a second tab 268 depending from the other end of child lock link lever 230E is located within slot 264 on sector arm 262. As sector gear 260 pivots between its child locked and child unlocked positions, child lock link lever 230E is translated so that first tab 266 slides between an unlocked (Figs. 19A and 19B) and a locked position (Figs. 19C and 19D) within slot 234E.

When child lock link lever 230E is in the unlocked position (Figs. 19A and 19B), tab 266 abuts against an engagement surface 270 on the end of inside release lever 100E. Thus, pulling inside door cable 97 and actuating inside release lever 100E (Fig 19B) pivots child lock link lever 230E, which in turn actuates auxiliary inside release lever 225E. As described earlier, actuating auxiliary inside release lever 225E causes depending tab 112E to actuate release lever 82 (Fig. 15) and release the latch (assuming link lock tab 92 is in the unlocked position).

When child lock link lever 230E is in the locked position (Figs. 19C and 19D), tab 266 is displaced away from engagement surface 270. Thus, actuating inside release lever 100E (Fig. 19D) does not actuate child lock link lever 230E, nor auxiliary inside release lever 225E. Latch 10E is not released, regardless of whether link lock tab 92 is in the locked or the unlocked position. The rear inside release assembly is decoupled from ratchet 26 and pawl 28, preventing accidental door openings.

### Power Release Function with Engage and Double Lock override

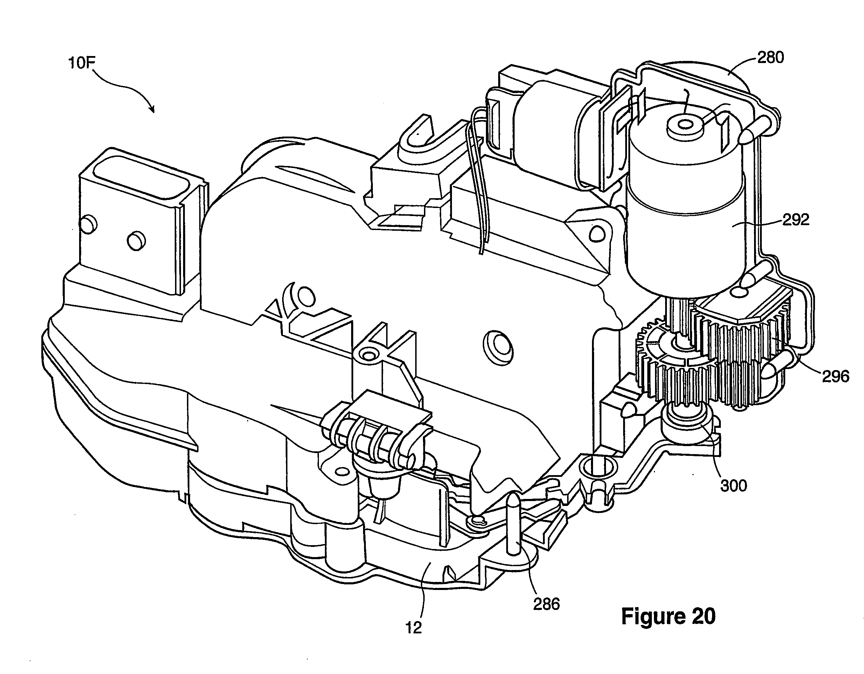

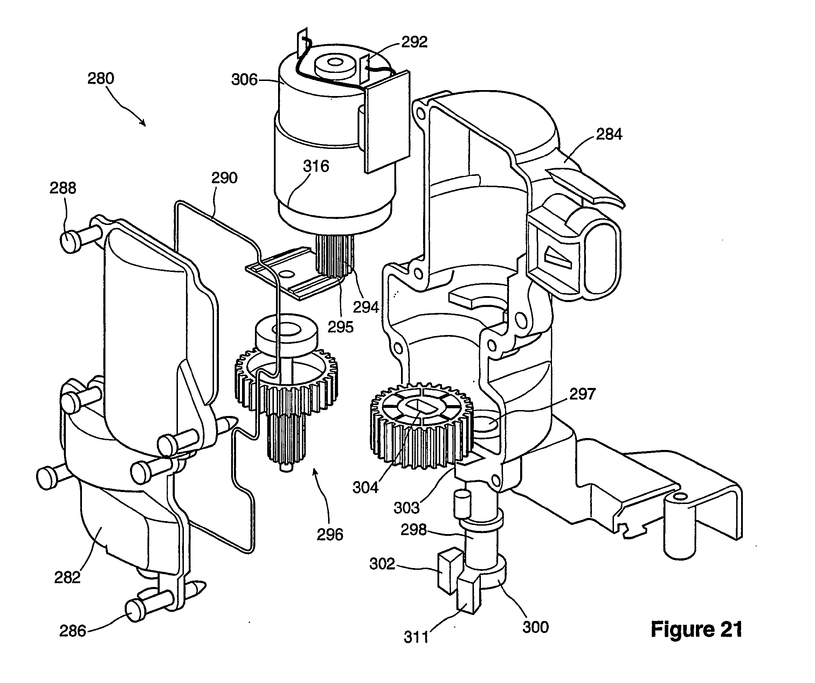

Latch 10 can also be adapted to include a power release function. The power release function actuates pawl 28 directly, resulting in a faster latch release than when waiting for the latch to unlock. To use power release, the user carriers an RF transponder (not shown), typically a key fob. When the user steps within range of the vehicle, and actuates the vehicle door handle (not shown) the power release function is engaged. Referring now to Figs. 20 and 21, a latch 10F is shown. Latch 10F includes an outboard power release actuator 280. Actuator 280 is adapted to be mounted onto latch housing 12, and includes a clam-shell actuator housing 282 and a complementary actuator cover 284. Fasteners 286 mount actuator 282 to latch housing 12 (Fig. 20), and additional fasteners 288 are used to fully secure actuator housing 282 and actuator cover 284 together. Both actuator housing 282 and actuator cover 284 are preferably formed from a rigid thermoplastic material. A rubberized seal 290 is provided between actuator housing 282 and actuator cover 284.

Actuator 280 includes a power release motor 292, which is activated when the outside door handle (not shown) is actuated and the remote transponder (not shown) is in range. Power release motor 292 is a unidirectional DC motor, and drives an output gear 294 via an output shaft 295. Output gear 294, in turn meshes with a two stage gear train 296. Those of skill in the art will recognize that the output gear 294 and gear train 296 are not particularly limited and other output gears (for example, a worm gear) and other gear train configurations could be used without departing from the scope of the invention. A Cam shaft 298 extends through and is freely pivotable within an aperture 297 in actuator housing 282. Cam shaft 298 is fixedly located into a axial mount 304 in gear train 296. A cam 300 is located on the end of cam shaft 298 outside of latch cover 284. The angular travel of cam 300 is delimited by a depending tab 302 abutting against a shoulder on stop 303 on latch cover 284, and is pivotable between a "resting" position against one side of stop 303 and an "actuated" position against the other. A return spring (not shown) is located within a spring housing 306 on power release motor 292 that is coaxial with output shaft 295. Activating the motor loads the return spring 306, and when the motor stops, the return spring reversibly drives the output shaft 295, returning cam 300 to its resting position.

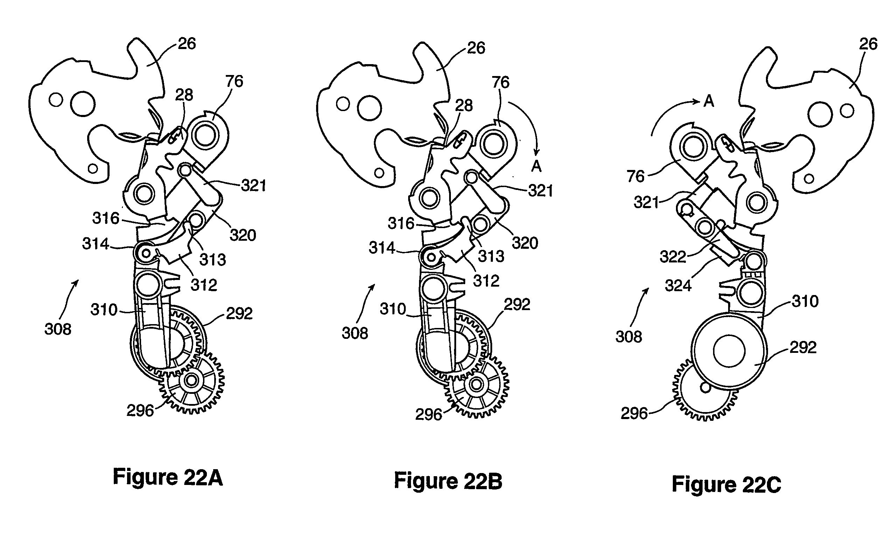

Referring now to Figs. 22A to 22C, a set of linkages 308 is interconnected between cam 300 and outside release lever 76. Collectively, linkages 308 are operable to move between a "bypass" position (Fig 22A), wherein activating actuator 280 does not actuate pawl 28 and an "engage" position (Fig 22B and 22C), wherein activating actuator 280 actuates pawl 28 to release the latch 10F. Linkages 308 include a power release lever 310 that is pivotally mounted on an eccentric boss 311 (Fig 21) on cam 300, and extends generally towards pawl 28. Linkages 308 further include a pawl engage lever 312 that is pivotally mounted on power release lever 310 opposite boss 311. A pawl hook 313 is located on an end of pawl engage lever 312. An engagement spring 314 is mounted around power release lever 310 and pawl engage lever 312, and it urges pawl hook 313 on pawl engage lever 312 towards an engagement catch 316 on pawl 28. As is described in greater detail below, when linkages 308 are in the bypass position, pawl hook 313 remains displaced away from engagement catch 316, and when linkages 308 are in the engage position, pawl hook 313 abuts against engagement catch 316.

Linkages 308 further include an engage lever 320 that is pivotally mounted to a post 312 on latch housing 12. When linkages 308 are in the bypass position, an arm 322 on engage lever 320 abuts against a sidewall 324 on pawl engage lever 312 forcing pawl hook 313 away from engagement catch 316. When linkages 308 are in the engage position, arm 322 on engage lever 320 is rotated away from sidewall 324, so that engagement spring 314 pivots pawl engage lever 312 adjacent to pawl 28.

Linkages 308 further include an engage link lever 321 that is pivotally connected at one end engage lever 320 and, at the other end to outside release lever 76. The rotational movement of engage lever 320 is therefore coupled to the movement of outside release lever 76. When outside release lever 76 is in its resting position, linkages 308 are pivoted to the bypass position. When outside release lever 76 is pivoted towards its actuated position (indicated by the arrow labeled 'A'), linkages 308 are pivoted to the engage position. Arm 322 on engage lever 320 rotates away from sidewall 324, and engagement spring 314 pivots the pawl hook 313 to abut against engagement catch 316. In the presently illustrated embodiment, outside release lever 76 does not need to fully reach its actuated position for linkages 308 to move into the engage position. When outside release lever 76 returns to its resting position, linkages 308 pivot back to the bypass position.

When actuator 280 activates, power release motor 292 pivots cam 300 from its resting to its actuate position. If linkages 308 are in the bypass position, the movement of pawl hook 313 is displaced away from engagement catch 316 so that pawl 28 is not actuated. Thus, if actuator 280 is accidentally activated, the latch is not released. If linkages 308 are in the engage position (i.e., a user pulls on the outside handle to actuate outside release lever 76 while carrying a valid transponder), pawl hook 313 catches engagement catch 316, and pawl 28 is actuated to release the latch.

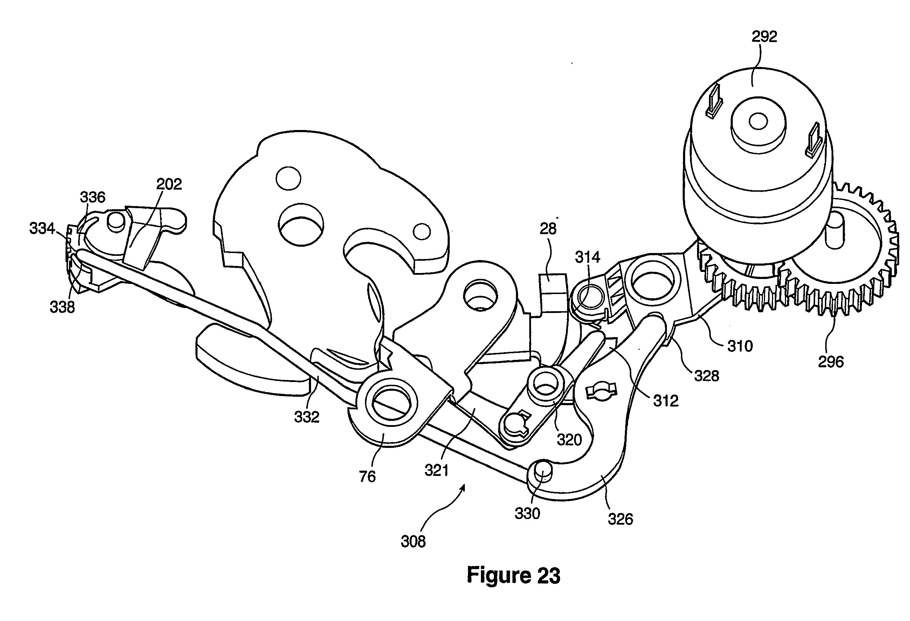

When actuator 280 actuates pawl 28 to release latch 10F, it also disengages the double lock on the latch so that the latch is double-unlocked. Double-unlocking is not required to release the latch, but it enables the inside and outside door handles (not shown) for future releases. Referring now to Fig. 23, an override lever 326 is pivotally mounted within a claw 328 on power release lever 310. A first end 330 of an override rod 332 is pivotally mounted to to override lever 326 on the end opposite claw 328. Override rod 332 extends through an opening in latch 10F (not shown) so that a second end 334 of override rod 312 is located within a slot 336 on deadbolt sector gear 202. When deadbolt sector gear 202 is in its double locked position, second end 334 abuts against a sidewall 338 at one end of slot 336. When cam 300 rotates to activate the power release, the second end 334 of override rod 332 pushes against sidewall 338 to pivot deadbolt sector gear 202 to its un-double locked position, thereby unlocking latch 10F. The override rod 332 does not replace double lock motor 196, but instead provides a redundant failsafe. When double lock motor 196 later pivots deadbolt sector gear 202 to its double locked position, second end 334 moves freely within slot 336.

| | | |
|---|---|---|
| Parts List | sidewall 81 | claw 144 |
| latch 10 | release lever 82 | shoulder 146 |
| latch 10B | depending tab 84 | shoulder 148 |
| latch 10C | release lever spring 86 | lock lever bumper 149 |
| latch 10D | hollow post 87 | slot 150 |
| latch 10E | hook 88 | link lock tab 152 |
| latch 10F | lock link slot 90 | lock link spring 153 |
| latch housing 12 | lock link tab 92 | sidewall 154 |
| latch cover 14 | lock link lever 94 | loop 156 |
| frame plate 16 | pawl insert 95 | outside lock lever 158 |
| outer chamber 18 | slot 96 | shoulder stop 160 |
| inner chamber 20 | inside door cable 97 | shoulder stop 162 |
| substrate 22 | ball end 98 | outside shoulder 164 |
| peripheral walls 24 | hook arm 99 | outside shoulder 166 |
| ratchet 26 | inside release lever 100 | lock motor 168 |
| pawl 28 | inside release lever | lock chamber 170 |
| fishmouth 30 | 100C | worm 172 |
| hook arm 32 | inside release lever | worm gear 174 |
| overslam bumper 34 | 100D | pinion 176 |
| outer seal 36 | inside release lever | pin 178 |
| ratchet rivet 38 | 100E | hole 180 |
| holes 40 | lever rivet 101 | gear spur 182 |
| open position stop | tab 102 | pin 184 |
| bumper 42 | inside release lever | hole 186 |
| overslam post 44 | spring 104 | cam 188 |
| ratchet spring 46 | inside release lever | cam arm 190 |
| spring channel 47 | spring 104E | cam shoulder 191 |
| sidewall 48 | post 106 | cam arm 192 |
| tab 50 | arms 108 | cam shoulder 193 |
| pawl rivet 52 | sidewall portion 109 | radial bumper 194 |
| holes 54 | tab 110 | frictional spring 195 |
| ratchet shoulder 56 | depending tab 112 | double lock motor 196 |
| primary tooth 58 | depending tab 112C | post 197 |
| secondary tooth 60 | depending tab 112E | double lock chamber |
| pawl spring 62 | inside release arm 114 | 198 |
| sidewall 64 | loop 118 | worm 200 |
| spring shoulder 66 | inside lock lever 122 | deadbolt sector gear 202 |
| sound dampeners 68 | lever rivet 126 | post 203 |
| fastener holes 70 | rivet holes 130 | hole 204 |
| peripheral sidewalls 72 | lock toggle spring 132 | deadbolt sidewall 205 |
| inner lip 73 | spring arm 133 | deadbolt sidewall 206 |
| adjustable rod clip 74 | lever post hole 134 | deadbolt arm 207 |
| clip arm 75 | cover post hole 136 | side face 208 |
| outside release lever 76 | lock lever 138 | shoulder 209 |
| depending tab 78 | post 140 | release arm 210 |
| sidewall 80 | arm 142 | connector passage 211 |
| door ajar switch 212 | endwall 238 | output shaft 295 |
| door open switch 214 | child lock knob 240 | gear train 296 |
| switch niches 216 | hole 242 | cam shaft 298 |
| switch cam 218 | tab 244 | aperture 297 |
| switch cam 218B | slot 246 | cam 300 |
| outside lock switch 220 | external groove 248 | depending tab 302 |
| outside unlock switch | child lock motor 250 | stop 303 |
| 222 | child lock motor | axial mount 304 |
| lockout tab 223 | housing 252 | spring housing 306 |
| lockout shoulder 224 | worm 254 | linkages 308 |
| | adjustable rod clip 256 | power release lever 310 |
| auxiliary inside release | loop arm 258 | boss 311 |
| lever 225 | arm 259 | pawl engage lever 312 |
| auxiliary inside release | sector gear 260 | pawl hook 313 |
| lever 225D | spring toggle 261 | engagement spring 314 |
| auxiliary inside release | sector arm 262 | engagement catch 316 |
| lever 225E | gear shoulder 263 | housing post 316 |
| child lock lever 226 | slot 264 | engage lever 320 |
| child lock pin 227 | tab 266 | first arm 321 |
| tab 228 | tab 268 | second arm 322 |
| hole 229 | engagement surface 270 | sidewall 324 |
| child lock link lever 230 | actuator 280 | override lever 326 |
| child lock link lever | actuator housing 282 | calw 328 |
| 230E | actuator cover 284 | first end 330 |
| claw 232 | fasteners 286 | override rod 332 |
| second tab 233 | fasteners 288 | second end 334 |
| slot 234 | seal 290 | slot 336 |
| slot 234E | power release motor 292 | sidewall 338 |
| endwall 236 | output gear 294 | |

## Claims

1. A latch for an automotive door, comprising:
a housing (12);
a ratchet (26) and pawl (28) mounted to the housing, the ratchet and pawl cooperatively operable to move between an engaged position operable to hold a striker and a released position; **characterised in that** the latch further comprises
a lock lever (138) pivotally mounted to the housing and operable to move between a locked and an unlocked position;
a lock link lever (94),
wherein the lock link lever (94) has a first end pivotally mounted to the lock lever (138) and a second end slidably retained in a slot on a release lever (82), the second end being movable between a locked and an unlocked position in the slot by pivoting the lock lever (138) between its corresponding locked and unlocked positions;
the release lever (82), pivotally mounted to the housing; wherein actuating the release lever (82) while the look link lever (94) is in the unlocked position pivots the lock link lever (94) in an arc to actuate the pawl (28) into the released position and
a double lock motor (196) connected to the lock link lever (94) so that the double lock is operable to kinematically decouple the lock link lever (94) from the lock lever (138) and kinematically recouple the lock link lever (94) to the lock lever (138).

2. The latch of claim 1, wherein the lock lever (138) is pivotally mounted to the housing, and further including
an outside lock lever (158), pivotally mounted to the lock lever (138), and movable between a locked and an unlocked position, and wherein pivoting the outside lock lever (158) into one of the locked and unlocked positions moves the lock lever (138) into the corresponding one of the locked and unlocked positions.

3. The latch of claim 2, wherein moving the outside lock lever (158) into the unlocked position while the lock link lever (94) is decoupled from the lock lever (138) kinematically recouples the lock link lever (94) to the lock lever (138).

4. The latch according to claim 3, wherein:
said housing (12) has a first and second surface the first surface having a channel adapted to receive the striker; each of the ratchet (26) and pawl (28) pivotally mounted to the first surface with a portion of the pawl (28) extending through an opening in the housing to the second surface, the ratchet (26) and pawl (28) cooperatively operable to move between an engaged position to hold the striker in the channel, and a released position to permit the striker from exiting the channel, the ratchet (26) and pawl (28) further being biased towards the engaged position
said release lever (82) is pivotally mounted to the second surface of the housing (12);
said lock lever (138) is pivotally mounted to the second surface of the housing (12); and
actuating the release lever (82) while the second end of the lock link lever (94) is in the locked position pivots the lock link lever (94) in a second arc that is clear of the pawl (28).

5. The latch of claim 4, wherein the first end of the lock link lever (94) includes a depending tab (78) that is retained within a slot (96) located in the lock lever (138) and is slidable between a first and a second position within the slot (96) and whereby sliding the depending tab (78) into the second position moves the second end of the lock link lever (94) into the locked position.

6. The latch of claim 5, wherein the depending tab (78) on the first end of the lock link lever (94) is biased towards the first position.

7. The latch of claim 6, wherein the outside lock lever (158) is operable to move the depending tab (78) on the first end of the lock link lever (94) from the first position into the second position when pivoted into the locked position.

8. The latch of claim 7, wherein the latch further includes a lock motor (168) and at least one gear interconnecting the lock motor (168) to a switch cam, the switch cam (218) operable to pivot the lock lever (138) between the locked and unlocked positions, so that so activating the lock motor (168) pivots the lock lever (138) from one of the locked and unlocked positions into the other of the locked and unlocked positions.

9. The latch of claim 7, wherein the latch further includes at least one gear interconnecting the double lock motor (196) and a deadbolt arm (207), the deadbolt arm (207) operable to move the depending tab (78) on the first end of the lock link lever (94) between the first position and second positions in the slot (96) on the lock lever (138), so that activating the double lock motor (196) moves the depending tab (78) from one of the first and second positions into the other of the first and second positions.

10. The latch of claim 9, wherein pivoting the outside lock lever (158) into the unblocked position moves the deadbolt arm (207) away from the first end of the lock link lever (94) so that the depending tab (78) on the first end of the lock link lever (94) returns to the first position.

11. The latch of claim 4, wherein the latch further includes a latch cover (14) in a fit engagement with a perimeter of the housing, thereby covering the second side of the housing.

12. The latch of claim 11, wherein the latch further includes an inside release lever (100) pivotally mounted to the latch cover (14) and operable to be connected to an inside door handle and kinematically coupled to the release lever (82) so that actuating the inside release lever (100) actuates the release lever (82).

13. The latch of claim 11, wherein the latch further includes an outside release lever (76) pivotally mounted to the latch housing (12) and operable to be connected to an outside door, the outside release lever (76) being kinematically coupled to the release lever (82) so that actuating the outside release lever (76) actuates the release lever (82).

14. The latch of claim 11, wherein the latch further includes an inside lock lever (122) mounted to the latch cover (14) and pivotal between a locked and an unlocked position, the inside lock lever (122) being kinematically connected to the lock lever (138) so that moving one of the inside lock lever (122) and the lock lever (138) to either the locked or unlocked position move the other of the inside lock lever (122) and the lock lever (138) to the same position.

15. The latch of claim 14, wherein the latch further includes a toggle spring (132) biasing the inside lock lever (122) towards the nearest of the locked and unlocked positions.

16. The latch of claim 11, wherein the ratchet (26) and pawl (28) are operable to cooperatively move to a secondary engagement position operable to retain a striker between the engagement position and the released position.

17. The latch of claim 16, wherein a plurality of switch sensors are mounted within the latch cover (14).

18. The latch of claim 17, wherein each of the plurality of switch sensors is activated by a switch cam (218) that is pivotally mounted to a ratchet rivet (38) that pivots in tandem with the ratchet (26).

19. The latch of claim 18, when the plurality of switch sensors includes at least one of an outside lock switch (220), an outside unlock switch (222), a door ajar switch (212), and a door open switch (214).

20. The latch of claim 19, wherein the switch cam (218) includes a lockout tab (223) extending out radially from the ratchet rivet (38) so that when the ratchet (26) is in the released position, the lockout tab (223) blocks the lock lever (138) from pivoting from the unlocked to the locked position.

21. The latch of claim 5, wherein the latch further includes a power release actuator, the power release actuator including:
a power release motor (292) operable to be engaged by an electrical signal;
a cam (300), rotatably driven by an output on the motor (292),
a pawl engage lever (312), operatively connected to the cam (300), and extending outwards towards the pawl (28); and
wherein activating the power release motor (292) translates the position of the pawl engage lever (312) so that the pawl engage lever (312) actuates the pawl (28), thereby releasing the latch.

22. The latch of claim 21, wherein the pawl engage lever (312) is selectively operable to actuate the pawl (28), the pawl engage lever (312) being pivotally mounted to a set of linkages that is pivotally mounted to the cam (300), the set of linkages being movable between an engage position where the pawl engage lever (312) abut against and is operable to actuate the pawl (28) and a bypass position wherein the pawl engage lever (312) is displaced away from the pawl (28) and so is inoperable to actuate the pawl (28).

23. The latch of claim 22, wherein the set of linkages is further operatively connected to the outside release lever (76) so that moving the outside release lever (76) from the resting position to the actuated position moves the set of linkages to the engage position, and that returning the outside release lever (76) to the resting position moves the set of linkages to the bypass position.

24. The latch of claim 23, wherein the latch further includes:
at least one gear interconnecting the double lock motor (186) and a deadbolt arm (207), the deadbolt arm (207) operable to move the depending tab (78) on the first end of the lock link lever (94) between the first position and second positions in the slot on the lock lever (138), so that activating the double lock motor (196) moves the depending tab (78) from one of the first and second positions into the other of the first and second positions; and
an override rod (332) operatively connecting the set of linkages to the at least one gear interconnecting the double lock motor (196) and the deadbolt arm (207) so that engaging the power release motor (292) moves the at least one gear to move the deadbolt arm (207) into the second position.

## Patentansprüche

1. Verriegelung für eine Autotür, welche aufweist:
ein Gehäuse (12),
ein Sperrrad (26) und eine Sperrklinke (28), die an dem Gehäuse angebracht sind, wobei das Sperrrad und die Sperrklinke zusammenwirken können, um sich zwischen einer eingerückten Position, die einen Anschlag halten kann, und einer gelösten Position zu bewegen,
**dadurch gekennzeichnet, dass** die Verriegelung des Weiteren aufweist:
einen Verriegelungshebel (138), der schwenkbar an dem Gehäuse angebracht ist und sich zwischen einer verriegelten und einer entriegelten Position bewegen kann,
einen Verriegelungsverbindungshebel (94), welcher ein erstes Ende, das schwenkbar an dem Verriegelungshebel (138) angebracht ist, und ein zweites Ende, das verschiebbar in einem Schlitz an einem Lösehebel (82) gehalten ist, aufweist, wobei das zweite Ende zwischen einer verriegelten und einer entriegelten Position in dem Schlitz durch Schwenken des Verriegelungshebels (138) zwischen seiner entsprechenden verriegelten und entriegelten Position bewegbar ist,
den Lösehebel (82), der schwenkbar an dem Gehäuse angebracht ist, wobei eine Betätigung des Lösehebels (82), während sich der Verriegelungsverbindungshebel (94) in der entriegelten Position befindet, bewirkt, dass der Verriegelungsverbindungshebel (94) in einem Bogen geschwenkt wird, um die Sperrklinke (28) zu betätigen und in die entriegelte Position zu versetzen, und
einen Doppelverriegelungsmotor (196), der mit dem Verriegelungsverbindungshebel (94) verbunden ist, so dass die Doppelverriegelung in der Lage ist, den Verriegelungsverbindungshebel (94) kinematisch von dem Verriegelungshebel (138) zu entkoppeln und den Verriegelungsverbindungshebel (94) kinematisch wieder mit dem Verriegelungshebel (138) zu koppeln.

2. Verriegelung nach Anspruch 1, wobei der Verriegelungshebel (138) schwenkbar an dem Gehäuse angebracht ist, des Weiteren aufweisend:
einen äußeren Verriegelungshebel (158), der schwenkbar an dem Verriegelungshebel (138) angebracht ist und zwischen einer verriegelten und einer entriegelten Position bewegbar ist, wobei sich der Verriegelungshebel (138), wenn der äußere Verriegelungshebel (158) in die verriegelte oder die entriegelte Position geschwenkt wird, in die entsprechende von der verriegelten und der entriegelten Position bewegt.

3. Verriegelung nach Anspruch 2, wobei der Verriegelungsverbindungshebel (94) kinematisch wieder mit dem Verriegelungshebel (138) gekoppelt wird, wenn der äußere Verriegelungshebel (158) in die entriegelte Position bewegt wird, während der Verriegelungsverbindungshebel (94) von dem Verriegelungshebel (138) entkoppelt ist.

4. Verriegelung nach Anspruch 3, wobei:
das Gehäuse (12) eine erste und eine zweite Fläche aufweist, wobei die erste Fläche einen Kanal aufweist, der dafür eingerichtet ist, den Anschlag aufzunehmen, wobei das Sperrrad (26) und die Sperrklinke (28) jeweils schwenkbar an der ersten Fläche angebracht sind, wobei sich ein Abschnitt der Sperrklinke (28) durch eine Öffnung in dem Gehäuse zu der zweiten Fläche erstreckt, wobei das Sperrrad (26) und die Sperrklinke (28) zusammenwirken können, um sich zwischen einer eingerückten Position zum Halten des Anschlags in dem Kanal und einer gelösten Position zum Ermöglichen, dass der Anschlag aus dem Kanal austritt, zu bewegen, wobei das Sperrrad (26) und die Sperrklinke (28) des Weiteren zu der eingerückten Position vorgespannt sind,
der Lösehebel (82) schwenkbar an der zweiten Fläche des Gehäuses (12) angebracht ist,
der Verriegelungshebel (138) schwenkbar an der zweiten Fläche des Gehäuses (12) angebracht ist und
das Betätigen des Lösehebels (82), während sich das zweite Ende des Verriegelungsverbindungshebels (94) in der verriegelten Position befindet, bewirkt, dass der Verriegelungsverbindungshebel (94) in einem zweiten Bogen geschwenkt wird, der die Sperrklinke (28) nicht überstreicht.

5. Verriegelung nach Anspruch 4, wobei das erste Ende des Verriegelungsverbindungshebels (94) einen abhängigen Ansatz (78) aufweist, der in einem Schlitz (96) gehalten ist, der sich im Verriegelungshebel (138) befindet, und zwischen einer ersten und einer zweiten Position innerhalb des Schlitzes (96) verschiebbar ist, und wobei sich beim Verschieben des abhängigen Ansatzes (78) in die zweite Position das zweite Ende des Verriegelungsverbindungshebels (94) in die verriegelte Position bewegt.

6. Verriegelung nach Anspruch 5, wobei der abhängige Ansatz (78) am ersten Ende des Verriegelungsverbindungshebels (94) zu der ersten Position vorgespannt ist.

7. Verriegelung nach Anspruch 6, wobei der äußere Verriegelungshebel (158) in der Lage ist, den abhängigen Ansatz (78) am ersten Ende des Verriegelungsverbindungshebels (94) von der ersten Position in die zweite Position zu bewegen, wenn er in die verriegelte Position geschwenkt ist.

8. Verriegelung nach Anspruch 7, wobei die Verriegelung des Weiteren einen Verriegelungsmotor (168) und mindestens ein Zahnrad aufweist, das den Verriegelungsmotor (168) mit einer Schaltnocke verbindet, wobei die Schaltnocke (218) in der Lage ist, den Verriegelungshebel (138) zwischen der verriegelten und der entriegelten Position zu schwenken, so dass beim derartigen Aktivieren des Verriegelungsmotors (168) der Verriegelungshebel (138) von der einen von der verriegelten und der entriegelten Position in die andere von der verriegelten und der entriegelten Position geschwenkt wird.

9. Verriegelung nach Anspruch 7, wobei die Verriegelung des Weiteren mindestens ein Zahnrad aufweist, das den Doppelverriegelungsmotor (196) und einen Schließriegelarm (207) verbindet, wobei der Schließriegelarm (207) in der Lage ist, den abhängigen Ansatz (78) am ersten Ende des Verriegelungsverbindungshebels (94) zwischen der ersten Position und der zweiten Position in dem Schlitz (96) an dem Verriegelungshebel (138) zu bewegen, so dass beim Aktivieren des Doppelverriegelungsmotors (196) der abhängige Ansatz (78) von einer von der ersten und der zweiten Position in die andere von der ersten und der zweiten Position bewegt wird.

10. Verriegelung nach Anspruch 9, wobei beim Schwenken des äußeren Verriegelungshebels (158) in die entriegelte Position der Schließriegelarm (207) vom ersten Ende des Verriegelungsverbindungshebels (94) fort bewegt wird, so dass der abhängige Ansatz (78) am ersten Ende des Verriegelungsverbindungshebels (94) zu der ersten Position zurückkehrt.

11. Verriegelung nach Anspruch 4, wobei die Verriegelung des Weiteren eine Verriegelungsabdeckung (14) in Passeingriff mit einem Umfang des Gehäuses aufweist, wodurch die zweite Seite des Gehäuses abgedeckt ist.

12. Verriegelung nach Anspruch 11, wobei die Verriegelung des Weiteren einen inneren Lösehebel (100) aufweist, der schwenkbar an der Verriegelungsabdeckung (14) angebracht ist und mit einem inneren Türgriff verbunden werden kann und kinematisch mit dem Lösehebel (82) gekoppelt werden kann, so dass durch Betätigen des inneren Lösehebels (100) der Lösehebel (82) betätigt wird.

13. Verriegelung nach Anspruch 11, wobei die Verriegelung des Weiteren einen äußeren Lösehebel (76) aufweist, der schwenkbar an dem Verriegelungsgehäuse (12) angebracht ist und mit einer äußeren Tür verbunden werden kann, wobei der äußere Lösehebel (76) kinematisch mit dem Lösehebel (82) gekoppelt ist, so dass durch Betätigen des äußeren Lösehebels (76) der Lösehebel (82) betätigt wird.

14. Verriegelung nach Anspruch 11, wobei die Verriegelung des Weiteren einen inneren Verriegelungshebel (122) aufweist, der an der Verriegelungsabdeckung (14) angebracht ist und zwischen einer verriegelten und einer entriegelten Position schwenkbar ist, wobei der innere Verriegelungshebel (122) kinematisch mit dem Verriegelungshebel (138) verbunden ist, so dass das Bewegen von einem von dem inneren Verriegelungshebel (122) und dem Verriegelungshebel (138) entweder in die verriegelte oder in die entriegelte Position bewirkt, dass der andere von dem inneren Verriegelungshebel (122) und dem Verriegelungshebel (138) in die gleiche Position bewegt wird.

15. Verriegelung nach Anspruch 14, wobei die Verriegelung des Weiteren eine Kippfeder (132) aufweist, die den inneren Verriegelungshebel (122) zu der nächstgelegenen von der verriegelten und der entriegelten Position vorspannt.

16. Verriegelung nach Anspruch 11, wobei das Sperrrad (26) und die Sperrklinke (28) in der Lage sind, sich zusammenwirkend zu einer zweiten eingerückten Position zu bewegen, in der ein Anschlag zwischen der eingerückten Position und der gelösten Position gehalten werden kann.

17. Verriegelung nach Anspruch 16, wobei eine Mehrzahl von Schaltsensoren innerhalb der Verriegelungsabdeckung (14) angebracht sind.

18. Verriegelung nach Anspruch 17, wobei jeder von der Mehrzahl von Schaltsensoren durch eine Schaltnocke (218) aktiviert wird, die schwenkbar an einer Sperrradniete (38) angebracht ist, welche gemeinsam mit dem Sperrrad (26) schwenkt.

19. Verriegelung nach Anspruch 18, wobei die Mehrzahl von Schaltsensoren mindestens einen von einem äußeren Verriegelungsschalter (220), einem äußeren Entriegelungsschalter (222), einem Türanlehnungsschalter (212) und einem Türöffnungsschalter (214) einschließen.

20. Verriegelung nach Anspruch 19, wobei die Schaltnocke (218) einen Entriegelungsansatz (223) aufweist, der sich radial aus der Sperrradniete (38) erstreckt, so dass der Entriegelungsansatz (223), wenn sich das Sperrrad (26) in der gelösten Position befindet, den Verriegelungshebel (138) blockiert und verhindert, dass er von der entriegelten zu der verriegelten Position geschwenkt wird.

21. Verriegelung nach Anspruch 5, wobei die Verriegelung des Weiteren ein elektrisch betriebenes Lösestellglied aufweist, wobei das elektrisch betriebene Lösestellglied aufweist:
einen elektrisch betriebenen Lösemotor (292), der durch ein elektrisches Signal betätigt werden kann,
eine Nocke (300), die durch eine Ausgabe an dem Motor (292) drehend angetrieben wird,
einen Sperrklinkeneinrückhebel (312), der wirkungsmäßig mit der Nocke (300) verbunden ist und sich zu der Sperrklinke (28) nach außen erstreckt, und
wobei beim Betätigen des elektrisch betriebenen Lösemotors (292) die Position des Sperrklinkeneinrückhebels (312) verschoben wird, so dass der Sperrklinkeneinrückhebel (312) die Sperrklinke (28) betätigt, wodurch die Verriegelung gelöst wird.

22. Verriegelung nach Anspruch 21, wobei der Sperrklinkeneinrückhebel (312) selektiv betätigbar ist, um die Sperrklinke (28) zu betätigen, wobei der Sperrklinkeneinrückhebel (312) schwenkbar an einem Satz von Verbindungsgliedern angebracht ist, der schwenkbar an der Nocke (300) angebracht ist, wobei der Satz von Verbindungsgliedern zwischen einer Einrückposition, in der der Sperrklinkeneinrückhebel (312) an die Sperrklinke (28) anstößt und in der Lage ist, die Sperrklinke (28) zu betätigen, und einer Nebenschlussposition, in der der Sperrklinkeneinrückhebel (312) gegenüber der Sperrklinke (28) versetzt ist und so nicht in der Lage ist, die Sperrklinke (28) zu betätigen, bewegbar ist.

23. Verriegelung nach Anspruch 22, wobei der Satz von Verbindungsgliedern des Weiteren wirkungsmäßig mit dem äußeren Lösehebel (76) verbunden ist, so dass das Bewegen des äußeren Lösehebels (76) von der Ruheposition zu der betätigten Position bewirkt, dass sich der Satz von Verbindungsgliedern zu der Einrückposition bewegt, und dass das Zurückkehren des äußeren Lösehebels (76) zu der Ruheposition bewirkt, dass sich der Satz von Verbindungsgliedern zu der Nebenschlussposition bewegt.

24. Verriegelung nach Anspruch 23, wobei die Verriegelung des Weiteren aufweist:
mindestens ein Zahnrad, das den Doppelverriegelungsmotor (196) und einen Schließriegelarm (207) verbindet, wobei der Schließriegelarm (207) in der Lage ist, den abhängigen Ansatz (78) am ersten Ende des Verriegelungsverbindungshebels (94) zwischen der ersten Position und der zweiten Position in dem Schlitz am Verriegelungshebel (138) zu bewegen, so dass das Aktivieren des Doppelverriegelungsmotors (196) bewirkt, dass sich der abhängige Ansatz (78) von einer von der ersten und der zweiten Position in die andere von der ersten und der zweiten Position bewegt, und
eine Benutzereingriffsstange (332), welche den Satz von Verbindungsgliedern wirkungsmäßig mit dem mindestens einen Zahnrad verbindet, das den Doppelverriegelungsmotor (196) und den Schließriegelarm (207) miteinander verbindet, so dass das Betätigen des elektrisch betriebenen Lösemotors (292) bewirkt, dass sich das mindestens eine Zahnrad bewegt, so dass der Schließriegelarm (207) in die zweite Position bewegt wird.

## Revendications

1. Serrure pour une porte d'automobile, comprenant :
un boîtier (12) ;
un rochet (26) et un loquet (28) montés sur le boîtier, le rochet et le loquet ayant pour fonction de coopérer pour se déplacer entre une position engagée où leur fonction est de tenir un percuteur, et une position relâchée ;
**caractérisée en ce que** la serrure comprend en outre un levier-verrou (138) monté en pivotement sur le boîtier et dont la fonction est de se déplacer entre une position verrouillée et une position déverrouillée ;
un levier de liaison de verrou (94), tel que le levier de liaison de verrou (94) possède une première extrémité montée en pivotement sur le levier-verrou (138) et une seconde extrémité retenue en coulissement dans une fente sur un levier de relâchement (82), la seconde extrémité étant mobile entre une position verrouillée et une position déverrouillée dans la fente en faisant pivoter le levier-verrou (138) entre les positions correspondantes verrouillée et déverrouillée ;
le levier de relâchement (82) étant monté en pivotement sur le boîtier,
de sorte qu'un actionnement du levier de relâchement (82) alors que le levier de liaison de verrou (94) est dans la position déverrouillée fait pivoter le levier de liaison de verrou (94) sur un arc pour actionner le loquet (28) vers la position relâchée ; et
un moteur de double verrou (196) relié au levier de liaison de verrou (94) de sorte que le double verrou a pour fonction de découpler cinématiquement le levier de liaison de verrou (94) vis-à-vis du levier de verrou (138) et de recoupler cinématiquement le levier de liaison de verrou (94) avec le levier de verrouillage (138).

2. Serrure selon la revendication 1, dans laquelle le levier-verrou (138) est monté en pivotement sur le boîtier, et incluant en outre un levier-verrou extérieur (158), monté en pivotement sur le levier-verrou (138), et mobile entre une position verrouillée et une position déverrouillée, et dans laquelle un pivotement du levier-verrou extérieur (158) vers l'une des positions verrouillée et déverrouillée déplace le levier-verrou (138) vers la position correspondante parmi les positions verrouillée et déverrouillée.

3. Serrure selon la revendication 2, dans laquelle un déplacement du levier-verrou extérieur (158) vers la position déverrouillée alors que le levier de liaison de verrou (94) est découplé du levier-verrou (138) recouple cinématiquement le levier de liaison de verrou (94) sur le levier-verrou (138).

4. Serrure selon la revendication 3, dans laquelle :
ledit boîtier (12) possède une première et une seconde surface, la première surface ayant un canal adapté à recevoir le percuteur ; chacun des éléments que sont le rochet (26) et le loquet (28) étant monté en pivotement sur la première surface, avec une portion de loquet (28) s'étendant à travers une ouverture dans le boîtier vers la seconde surface, le rochet (26) et le loquet (28) ayant pour fonction de coopérer pour se déplacer entre une position engagée destinée à tenir le percuteur dans le canal, et une position relâchée pour permettre au percuteur de sortir du canal, le rochet (26) et le loquet (28) étant en outre sollicités vers la position engagée ;
ledit levier de relâchement (82) est monté en pivotement sur la seconde surface du boîtier (12) ;
ledit levier-verrou (138) est monté en pivotement sur la seconde surface du boîtier (12) ; et
l'actionnement du levier de relâchement (82) alors que la seconde extrémité du levier de liaison de verrou (94) est dans la position verrouillée fait pivoter le levier de liaison de verrou (94) sur un second arc qui est dégagé du loquet (28).

5. Serrure selon la revendication 4, dans laquelle la première extrémité du levier de liaison de verrou (94) inclut une patte (78) attenante qui est retenue dans une fente (96) située dans le levier-verrou (138) et qui est capable de coulisser entre une première et une seconde position à l'intérieur de la fente (96), et grâce à quoi un coulissement de la patte attenante (78) vers la seconde position déplace la seconde extrémité du levier de liaison de verrou (94) vers la position verrouillée.

6. Serrure selon la revendication 5, dans laquelle la patte attenante (78) sur la première extrémité du levier de liaison de verrou (94) est sollicitée vers la première position.

7. Serrure selon la revendication 6, dans laquelle le levier-verrou extérieur (158) a pour fonction de déplacer la patte attenante (78) sur la première extrémité du levier de liaison de verrou (94) depuis la première position vers la seconde position lorsqu'il est pivoté vers la position verrouillée.

8. Serrure selon la revendication 7, dans laquelle la serrure inclut en outre un moteur de verrou (168) et au moins un engrenage qui interconnecte le moteur de verrou (168) et une came de commutateur, la came de commutateur (218) ayant pour fonction de faire pivoter le levier-verrou (138) entre les positions verrouillée et déverrouillée, de sorte qu'une activation du moteur de verrou (168) fait pivoter le levier-verrou (138) depuis l'une de ses positions verrouillée et déverrouillée vers l'autre des positions verrouillée et déverrouillée.

9. Serrure selon la revendication 7, dans laquelle le verrou inclut en outre au moins un engrenage qui interconnecte le moteur de double verrou (196) et un bras de pêne (207), le bras de pêne (207) ayant pour fonction de déplacer la patte attenante (78) sur la première extrémité du levier de liaison de verrou (94) entre la première et la seconde position dans la fente (96) sur le levier-verrou (138), de sorte qu'une activation du moteur de double verrou (196) déplace la patte attenante (78) depuis l'une parmi la première et la seconde position vers l'autre de la première et de la seconde position.

10. Serrure selon la revendication 9, dans laquelle un pivotement du levier-verrou extérieur (158) vers la position déverrouillée déplace le bras de pêne (207) en éloignement de la première extrémité du levier de liaison de verrou (94), de sorte que la patte attenante (78) sur la première extrémité du levier de liaison de verrou (94) retourne à la première position.

11. Serrure selon la revendication 4, dans laquelle la serrure inclut en outre un couvre-serrure (14) qui engage de manière serrée un périmètre du boîtier, en couvrant ainsi le second côté du boîtier.

12. Serrure selon la revendication 11, dans laquelle la serrure inclut en outre un levier de relâchement intérieur (100) monté en pivotement sur le couvre-serrure (14) et susceptible d'être actionné pour être connecté à une poignée de porte intérieure et couplé cinématiquement au levier de relâchement (82) de sorte qu'un actionnement du levier de relâchement intérieur (100) actionne le levier de relâchement (82).

13. Serrure selon la revendication 11, dans laquelle la serrure inclut en outre un levier de relâchement extérieur (76) monté en pivotement sur le boîtier de serrure (12) et qui peut être actionné pour être connecté à une porte extérieure, le levier de relâchement extérieur (76) étant couplé cinématiquement au levier de relâchement (82) de sorte qu'un actionnement du levier de relâchement extérieur (76) actionne le levier de relâchement (82).

14. Serrure selon la revendication 11, dans laquelle la serrure inclut en outre un levier-verrou intérieur (122) monté sur le couvre-serrure (14) et capable de pivotement entre une position verrouillée et une position déverrouillée, le levier-verrou intérieur (122) étant connecté cinématiquement au levier-verrou (138) de sorte qu'un déplacement d'un levier parmi le levier-verrou intérieur (122) et le levier-verrou (138) soit vers la position verrouillée soit vers la position déverrouillée déplace l'autre parmi le levier-verrou intérieur (122) et le levier-verrou (138) vers la même position.

15. Serrure selon la revendication de 14, dans laquelle la serrure inclut en outre un ressort à bascule (132) qui sollicite le levier-verrou intérieur (122) vers la plus proche des positions verrouillée et déverrouillée.

16. Serrure selon la revendication 11, dans laquelle le rochet (26) et le loquet (28) peuvent être actionnés pour se déplacer en coopération vers une position d'engagement secondaire avec pour fonction de retenir un percuteur entre la position d'engagement et la position relâchée.

17. Serrure selon la revendication 16, dans laquelle une pluralité de capteurs-commutateurs sont montés dans le couvre-serrure (14).

18. Serrure selon la revendication 17, dans laquelle chacun de la pluralité de capteurs-commutateurs est activé par une came de commutation (218) qui est montée en pivotement sur un rivet de rochet (38) qui pivote en tandem avec le rochet (26).

19. Serrure selon la revendication 18, dans laquelle la pluralité de capteurs-commutateurs inclut au moins un commutateur parmi un commutateur de verrouillage extérieur (220), un commutateur de déverrouillage extérieur (222), un commutateur de porte entrebâillée (212) et un commutateur de porte ouverte (214).

20. Serrure selon la revendication 19, dans laquelle la came de commutateur (218) inclut une patte de blocage (223) qui s'étend radialement vers l'extérieur depuis le rivet de rochet (38), de sorte que lorsque le rochet (26) est dans la position relâchée, la patte de blocage (223) bloque le levier-verrou (138) à l'encontre d'un pivotement depuis la position déverrouillée vers la position verrouillée.

21. Serrure selon la revendication 5, dans laquelle la serrure inclut en outre un actionneur de relâchement motorisé, l'actionneur de relâchement motorisé incluant :
un moteur de relâchement (292) dont la fonction est d'être excité par un signal électrique ;
une came (300) entraînée en rotation par une sortie du moteur (292) ;
un levier d'engagement de loquet (312) fonctionnellement connecté à la came (300) et s'étendant vers l'extérieur en direction du loquet (28) ; et
dans laquelle une activation du moteur de relâchement (292) effectue une translation de la position du levier d'engagement de loquet (312) de sorte que le levier d'engagement de loquet (312) actionne le loquet (28) en relâchant ainsi la serrure.

22. Serrure selon la revendication 21, dans laquelle le levier d'engagement de loquet (312) a sélectivement pour fonction d'actionner le loquet (28), le levier d'engagement de loquet (312) étant monté en pivotement sur un groupe de tringlerie qui est monté en pivotement sur la came (300), le groupe de tringlerie étant mobile entre une position d'engagement dans laquelle le levier d'engagement de loquet (312) vient buter contre et a pour fonction d'actionner le loquet (28), et une position de by-pass dans laquelle le levier d'engagement de loquet (312) est déplacé en éloignement du loquet (28) et est donc dans l'incapacité d'actionner le loquet (28).

23. Serrure selon la revendication 22, dans laquelle le groupe de tringlerie est en outre fonctionnellement connecté au levier de relâchement extérieur (76) de sorte qu'un déplacement du levier de relâchement extérieur (76) depuis la position de repos vers la position actionnée déplace le groupe de tringlerie vers la position d'engagement, et qu'un retour du levier de relâchement extérieur (76) à la position de repos déplace le groupe de tringlerie vers la position de by-pass.

24. Serrure selon la revendication 23, dans laquelle la serrure inclut en outre :
au moins un engrenage qui interconnecte le moteur de double verrou (196) et un bras de pêne (207), le bras de pêne (207) ayant pour fonction de déplacer la patte attenante (78) sur la première extrémité du levier de liaison de verrou (94) entre la première position et la seconde position dans la fente sur le levier-verrou (138), de sorte qu'une activation du moteur de double verrou (196) déplace la patte attenante (78) vers l'une parmi la première et la seconde position vers l'autre parmi la première et la seconde position ; et
une barre prioritaire (332) qui assure fonctionnellement une connexion du groupe de tringlerie avec ledit au moins un engrenage en interconnectant le moteur de double verrou (196) et le bras de pêne (207), de sorte qu'une excitation du moteur de relâchement (292) déplace ledit au moins un engrenage pour déplacer le bras de pêne (207) vers la seconde position.
